(19) Europäisches Patentamt
European Patent Office
Office européen des brevets

(11) EP 0 824 112 B1

(12) EUROPÄISCHE PATENTSCHRIFT

(45) Veröffentlichungstag und Bekanntmachung des Hinweises auf die Patenterteilung:
**10.05.2006 Patentblatt 2006/19**

(51) Int Cl.:
***C08F 4/603*** (2006.01) ***C07F 5/02*** (2006.01)
***C08F 10/00*** (2006.01)

(21) Anmeldenummer: **97113300.4**

(22) Anmeldetag: **01.08.1997**

(54) **Geträgerte chemische Verbindung**

Supported chemical compound

Composé chimique supporté

(84) Benannte Vertragsstaaten:
**AT BE DE ES FI FR GB IT NL SE**

(30) Priorität: **13.08.1996 DE 19632557**
**13.08.1996 DE 19632558**
**14.11.1996 DE 19647070**

(43) Veröffentlichungstag der Anmeldung:
**18.02.1998 Patentblatt 1998/08**

(73) Patentinhaber: **Basell Polyolefine GmbH**
**50389 Wesseling (DE)**

(72) Erfinder:
- **Fritze, Cornelia, Dr.**
**60529 Frankfurt (DE)**
- **Küber, Frank, Dr.**
**61440 Oberursel (DE)**
- **Bohnen, Hans, Dr.**
**65527 Niedernhausen (DE)**

(56) Entgegenhaltungen:
**EP-A- 0 560 128** **EP-A- 0 710 663**
**WO-A-93/11172** **WO-A-93/19103**
**WO-A-96/04319** **WO-A-96/23005**
**WO-A-96/28480** **WO-A-97/19959**

EP 0 824 112 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft eine kovalent geträgerte chemische Verbindung, welche neutral oder ionisch aufgebaut sein kann und in Kombination mit einer Übergangsmetallverbindung wie einem Metallocen ein Katalysatorsystem bilden kann, welches sich zur Polymerisation von Olefinen eignet. Dabei kann auf die Verwendung von Aluminoxanen wie Methylaluminiumoxan als Cokatalysator verzichtet und dennoch eine hohe Katalysatoraktivität erzielt werden.

Die Rolle von kationischen Komplexen bei der Ziegler-Natta-Polymerisation mit Metallocenen ist allgemein anerkannt (M. Bochmann, Nachr. Chem. Lab. Techn. 1993, 41, 1220).

MAO als bislang wirksamster Cokatalysator hat den Nachteil in hohem Überschuß eingesetzt zu werden. Die Darstellung kationischer Alkylkomplexe eröffnet den Weg zu MAO-freien Katalysatoren mit vergleichbarer Aktivität. Die Synthese kationischer Alkylkomplexe gelingt durch

a) Protolyse von Metallocenverbindungen mit beispielsweise schwach sauren Ammoniumsalzen des sehr stabilen, nicht basischen Tetralpentafluorophenyl)borat z.B. $[PhMe_2NH]^+[B(C_6F_5)_4])^-$,

b) durch Abstraktion einer Alkylgruppe aus Metallocenverbindungen mit Hilfe von starken Lewis-Säuren, wobei als Lewis-Säuren sowohl Salze der Form $(Ph_3C^+BR_4^-)$ als auch starke, neutrale Lewis-Säuren wie $B(C_6F_5)_3$ dienen können oder durch

c) Oxidation von Metallocendialkylkomplexen mit beispielsweise $AgBPh_4$ oder $[Cp_2Fe][BPh_4]$.

Die Synthese von "Kationen-ähnlichen" Metallocen-Polymerisationskatalysatoren, wird im J. Am. Chem. Soc. 1991, 113, 3623 beschrieben. Darin erfolgt die Alkylabstraktion von einer Metallocendialkylverbindung mittels Tris(pentafluorphenyl)boran. In EP 427,697 wird dieses Syntheseprinzip und ein entsprechendes Katalysatorsystem, bestehend aus einer neutralen Metallocenspezies (z.B. $Cp_2ZrMe_2$), einer Lewis-Säure (z.B. $B(C_6F_5)_3$) und Aluminiumalkylen beansprucht. Ein Verfahren zur Herstellung von Salzen der allgemeinen Form $LMX^+$ $XA^-$ nach dem oben beschriebenen Prinzip wird in EP 520,732 beansprucht.

EP 558,158 beansprucht zwitterionische Katalysatorsysteme, die aus Metallocendialkylverbindungen und Salzen der Form $[R_3NH]^+[BPh_4]^-$ dargestellt werden. Die Umsetzung eines solchen Salzes mit z.B. $Cp^*_2ZrMe_2$ liefert durch Protolyse unter Methanabspaltung intermediär ein Zirkonocenmethylkation. Dieses reagiert über C-H-Aktivierung zum Zwitterion $Cp^*_2Zr^+$-(m-$C_6H_4$)-$BPh_3^-$ ab.

Nach diesem Reaktionsprinzip entsteht nach der Protolyse einer Metallocendialkylspezies mit einem perfluorierten $[R_3NH]^+(B(C_6F_5)_4]^-$-Salz im ersten Schritt ebenfalls eine kationische Spezies, wobei nun die Folgereaktion (C-H-Aktivierung) zu zwitterionischen Komplexen nicht möglich ist. Es entstehen so Salze der Form $(Cp_2Zr\text{-}R\text{-}RH]^+(B(C_6F_5)_4]^-$. In US 5,348,299 werden entsprechende Systeme beansprucht, wobei Dimethylaniliniumsalze mit perfluorierten Tetraphenylboratanionen verwendet werden. Die Trägerung solcher Systeme dient einer besseren Morphologie des Polymers und wird in WO 9109882 beschrieben.

Der Nachteil bisheriger Trägerungsverfahren, wie sie in WO 91/09882 beschrieben werden, besteht darin, daß das ionische Katalysatorsystem nur physikalisch an den Träger gebunden ist. Es kann daher leicht durch Lösungsmittel von der Trägeroberfläche abgelöst werden. Die dann durchgeführte homogene Polymerisation führt zu einer schlechteren Morphologie des Polymers.

Die Dokumente WO 93/11172, WO 96/04319, WO 93/19103, WO 96/23005 und WO 97/19959 offenbaren jeweils Katalysatorzusammensetzungen, bei denen ionische Aktivatoren, die ein Metall- oder metalloides Atom wie Bor aufweisen, kovalent an die Oberfläche eines Trägers gebundenen sind. Die an den Träger gebundenen ionischen Gruppen weisen hierbei jeweils nur ein einziges Metall- bzw. metalloides Atom auf.

EP-A 710 663 beschreibt als Cokatalysatoren für die Polymerisation von Olefinen einsetzbare Polymere, die durch Polymerisation von Borverbindung erhalten werden, die polymerisierbare vinylische Doppelbindungen enthalten. Auch bei diesen Polymeren sind jeweils ein Boratom aufweisende Gruppierungen an den Träger fixiert.

EP-A 560 128 beschreibt neutrale an einen Träger gebundene Metallalkyle, die bei der Polymerisation von Olefinen verwendet werden können. Metallalkyle, die mit halogenierten Resten substituiert sind, sind jedoch nicht offenbart.

Die vorliegende Erfindung betrifft somit eine geträgerte chemische Verbindung, sowie ein Verfahren zur Herstellung dieser geträgerten chemischen Verbindung, welche kovalent an ein Trägermaterial gebunden ist. Ferner betrifft sie ein Katalysatorsystem enthaltend mindestens eine Übergangsmetallverbindung und mindestens eine erfindungsgemäße, geträgerte chemische Verbindung als cokatalysator. Zudem wird ein Verfahren zur Herstellung von Polyolefinen in Gegenwart der geträgerten chemischen Verbindung beschrieben.

Die geträgerte chemische Verbindung besteht aus einem Träger T, y Einheiten N der nachstehend bezeichneten

Formel (II), welche kovalent an den Träger gebunden sind, sowie b Einheiten A.

Die geträgerte chemische Verbindung weist die allgemeine Formel (I) auf

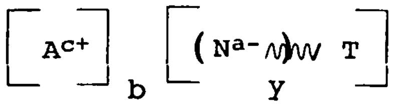

(I)

worin,

- $A^{c+}$ ein Kation ist,
- c eine gänze Zahl von 1 bis 10 ist,
- b eine ganze Zahl ≥ 0 ist,
- T ein Träger ist,
- y eine ganze Zahl ≥ 1 ist,
- a eine ganze Zahl von 0 bis 10 ist, wobei a·y = c·b ist, und
- N eine Einheit der Formel (II) ist

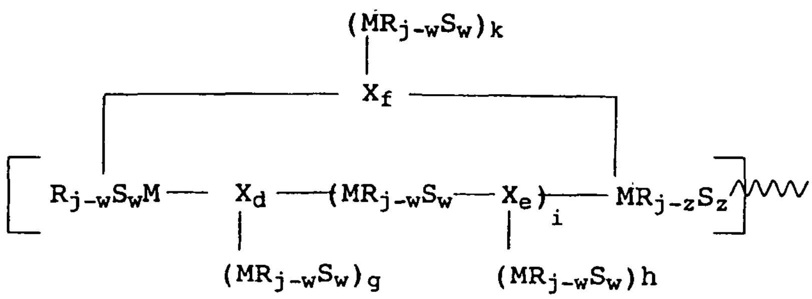

(II),

worin

R unabhängig voneinander gleiche oder verschiedene, Substituenten von M sind wie ein Halogenatom oder eine $C_1$-$C_{40}$-kohlenstoffhaltige Gruppe sind wie eine $C_1$-$C_{40}$-Alkyl, $C_1$-$C_{40}$-Halo- gen-Alkyl, $C_6$-$C_{40}$-Aryl, $C_6$-$C_{40}$-Halogen-Aryl-, $C_7$-$C_{40}$-Arylalkyl oder $C_7$-$C_{40}$-Halogen-Arylalkyl-Gruppe,

X unabhängig voneinander gleich oder verschieden eine $C_1$-$C_{40}$-kohlenstoffhaltige Gruppe sind z.B. eine zweibindige kohlenstoffhaltige Gruppe wie eine $C_1$-$C_{40}$-Alkylen-, $C_1$-$C_{40}$-Halogen-Alkylen-, $C_6$-$C_{40}$-Arylen-, $C_6$-$C_{40}$-Halogen-Arylen-, $C_7$-$C_{40}$-Arylalkylen- oder $C_7$-$C_{40}$-Halogen-Arylalkylen, $C_2$-$C_{40}$-Alkinylen-, $C_2$-$C_{40}$-Halogen-Alkinylen, $C_2$-$C_{40}$-Alkenylen- oder $C_2$-$C_{40}$-Halogen-Alkenylen-Gruppe, oder eine dreibindige kohlenstoffhaltige Gruppe wie eine $C_1$-$C_{40}$-Alkantriyl-, $C_1$-$C_{40}$-Halogenalkantriyl-, $C_6$-$C_{40}$-Arentriyl-, $C_6$-$C_{40}$-Halogenarentriyl-, $C_7$-$C_{40}$-Arenalkantriyl-, $C_7$-$C_{40}$-Halogenarenalkantriyl-, $C_2$-$C_{40}$-Alkintriyl-,$C_2$-$C_{40}$-Halogenalkintriyl-, $C_2$-$C_{40}$-Alkentriyl- oder $C_2$-$C_{40}$-Halogenalkentriyl-Gruppe,

M unabhängig voneinander gleich oder verschieden sind und ein Element der Gruppe IIIa des Periodensystems der Elemente bedeuten,

d gleich 0 oder 1 ist, e gleich 0 oder 1 ist, f gleich 0 oder 1 ist,

g eine ganze Zahl von 0 bis 10 ist, h eine ganze Zahl von 0 bis 10 ist,

k eine ganze Zahl von 0 bis 10 ist,

i eine ganze Zahl von 0 bis 1000 ist,

j eine ganze Zahl von 1 bis 6 ist,

S gleich oder verschieden Spacer sind, welche M kovalent mit T verbinden, wobei S die Formel (III) haben,

$$-R'_n-Q_qB_p\sim\sim \quad (III)$$

worin

R'gleich oder verschieden eine $C_1$-$C_{40}$-kohlenstoffhaltige Gruppe ist, -NR"-, -PR"-, -P(O)R"-, $-Si(R")_2-O-Si(R")_2-$, -C-O-$SiR"_2$-, oder -CONR"-, wobei R" eine $C_1$-$C_{40}$-kohlenstoffhaltige Gruppe ist oder R' ist eine heteroatomhal- tige Gruppe wie -SO-, $-SO_2-$, -S-, -CO-, $-CO_2-$, -O-, -NH- oder -PH-,

n eine ganze Zahl ≥ 0 ist,

Q gleich Si, N, P, S oder O ist,

q gleich 0 oder 1 ist,

BSubstituent von Q ist und $NH_2$, $PH_2$ oder eine $C_1$-$C_{40}$-kohlenstoffhaltige Gruppe ist, $-NR"_2-$, COR"-, $-CO_2R"-$, $-PR"_2-$, $-P(O)R"_2-$, $-Si(R")_2-O-Si(R")_3-$, $-C-O-SiR"_3-$, $-CONR"_2-$, -SOR", $-SO_2R"-$, -OR", -SR", -NHR" oder -PHR", wobei R" eine $C_1$-$C_{40}$-kohlenstoffhaltige Gruppe ist und

p eine ganze Zahl ≥ 0 ist,

B zwei Spacer S miteinander verbinden kann und $\sim\sim$ bedeutet eine oder mehrere kovalente Bindungen zum Träger T, wobei in diesem Fall B wie R' definiert ist und
w in Formel (II) gleich oder verschieden 0, 1 oder 2 sind und z in Formel (II) gleich 0, 1 oder 2 ist.

Die geträgerte chemische Verbindung kann auch eine geträgerte neutrale chemische Verbindung der Formel (I)

$$\left[A^{c+}\right]_b\left[\left(N^{a-}\sim\sim\right)_y T\right] \quad (I)$$

sein, worin

$A^{c+}$ ein Kation ist,
c eine ganze Zahl von 1 bis 10 ist,
b eine ganze Zahl ≥ 0 ist,
T ein Träger ist,
y eine ganze Zahl ≥ 1 ist,
a 0 ist, wobei a·y = c·b ist, und
N eine Einheit der Formel (II) ist

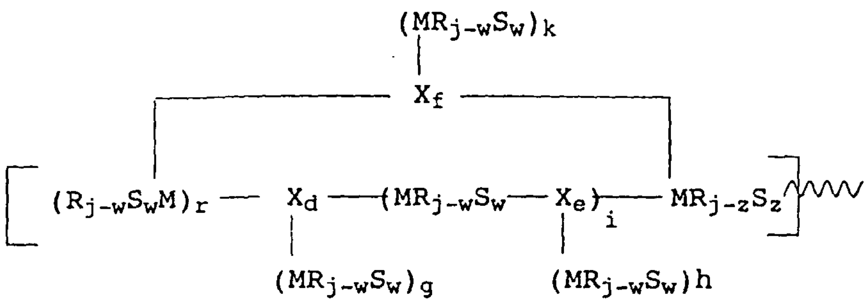

(II)

worin,

R unabhängig voneinander gleiche oder verschiedene Substituenten von M sind wie ein $C_1$-$C_{40}$-Kohlenwasserstoffrest, der halogeniert ist,

X unabhängig voneinander gleich oder verschieden ein $C_1$-$C_{40}$-Kohlenstoffhaltige Gruppe sind

M unabhängig voneinander gleich oder verschieden sind und ein Element der Gruppe IIa, IIIa, IVa oder Va des Periodensystems der Elemente bedeuten,

d gleich 0 oder 1 ist, e gleich 0 oder 1 ist, f gleich 0 oder 1 ist,

g eine ganze Zahl von 0 bis 10 ist, h eine ganze Zahl von 0 bis 10 ist, k eine ganze Zahl von 0 bis 10 ist, r eine ganze Zahl von 0 bis 10 ist,

i eine ganze Zahl von 0 bis 1000 ist,

j eine ganze Zahl von 1 bis 6 ist

S gleich oder verschieden Spacer sind, welche M kovalent mit T verbinden, und wobei S die Formel (III) haben

$$-R'_n-Q_qB_p\sim\sim\sim \qquad \text{(III)}$$

worin

R'gleich oder verschieden eine $C_1$-$C_{40}$-kohlenstoffhaltige Gruppe ist, -NR"-, -PR"-, -P(O)R"-, -Si(R")$_2$-O-Si(R")$_2$-, -C-O-SiR"$_2$- oder -CONR"-, wobei R" eine $C_1$-$C_{40}$-kohlenstoffhaltige Gruppe oder R' ist eine heteroatomhaltige Gruppe wie -SO-, -$SO_2$-, -S-, -CO-, -$CO_2$-, -O-, -NH- oder -PH-,

n eine ganze Zahl $\geq 0$ ist,

Q gleich Si, N, P, S oder 0 ist,

q gleich 0 oder 1 ist,

BSubstituent von Q ist und $NH_2$, $PH_2$ oder eine $C_1$-$C_{40}$-kohlenstoffhaltige Gruppe ist, -NR"$_2$, -COR"-, -$CO_2$R"-, -PR"$_2$, p(O)R"$_2$, -Si(R")$_2$-O-Si(R")$_3$-, -C-O-SiR"$_3$-, -CONR"$_2$, -SOR"; -$SO_2$R"-, -SR", -OR", -NHR" oder -PHR", wobei R" eine $C_1$-$C_{40}$-kohlenstoffhaltige Gruppe ist und

p eine ganze Zahl $\geq 0$ ist,

B zwei Spacer S miteinander verbinden kann, und $\sim\sim\sim$ bedeutet eine oder mehrere kovalente Bindungen zum Träger T, wobei in diesem Fall B wie R' definiert ist, und
w in Formel (II) gleich oder verschieden 0, 1 oder 2 sind und z in Formel (II) gleich 0, 1 oder 2 ist.
Wenn a=0 ist, so handelt es sich um eine neutrale Einheit N; wenn a $\geq$ 1 is, so handelt es sich um eine negativ geladene Einheit N.

Jede der y Einheiten N der Formel (II) kann von M aus direkt oder über einen oder mehrere Spacer S kovalent an den Träger T gebunden sein. Dabei kann jedes M und jeder Spacer S eine oder mehrere kovalente Bindungen an den Träger T haben. Dies wird in Formel (I), (II), (III) und (IV) symbolisiert durch das Zeichen $\sim\sim\sim$. Der Übersichtlichkeit halber ist in Formel (II) die Bindung an den Träger (d.h. $\sim\sim\sim$, exemplarisch nur für eine Gruppe MRS eingezeichnet, es können jedoch auch die anderen Gruppen MRS an den Träger binden. In den Gruppen MRS, in denen z = 0 und/oder w = 0 ist, ist M direkt kovalent an den Träger gebunden.

Weist die geträgerte chemische Verbindung der Formel (I) mehrere Gruppen MRS auf, so können diese gleich oder voneinander verschieden sein. Die Anzahl der Substituenten R in einer Gruppe MRS hängt ab von der Wertigkeit und der Bindigkeit von M. Bevorzugt ist z = 1 und alle w = 0.

Bevorzugt ist in dem Spacer S der Formel (III) R' gleich oder verschieden und eine $C_1$-$C_{40}$-Alkylen-, $C_1$-$C_{40}$-Ha-

logen-Alkylen-, $C_6$-$C_{40}$-Arylen-, $C_6$-$C_{40}$-Halogen-Arylen-, $C_7$-$C_{40}$-Arylalkylen- oder $C_7$-$C_{40}$-Halogen-Arylalkylen-, $C_2$-$C_{40}$-Alkinylen-, $C_2$-$C_{40}$-Halogen-Alkinylen-, $C_2$-$C_{40}$-Alkenylen-, $C_2$-$C_{40}$-Halogen-Alkenylen-, $C_6$-$C_{40}$-Arylenoxy-, $C_7$-$C_{40}$-Alkylarylenoxy- oder $C_7$-$C_{40}$-Arylalkylenoxy-Gruppe, -NR''-, -PR''-, -P(O)R''-, $-Si(R'')_2-O-Si(R'')_2-$, $-C-O-SiR''_2-$ oder -CONR''-, wobei R''eine $C_1$-$C_{40}$-Alkyl-, $C_1$-$C_{40}$-Halogen-Alkyl-, $C_6$-$C_{40}$-Aryl-, $C_6$-$C_{40}$-Halogen-Aryl-, $C_7$-$C_{40}$-Arylalkyl- oder $C_7$-$C_{40}$-Halogen-Arylalkyl-, $C_2$-$C_{40}$-Alkinyl-, $C_2$-$C_{40}$-Halogen-Alkinyl, $C_2$-$C_{40}$-Alkenyl-, $C_2$-$C_{40}$-Halogen-Alkenyl-, $C_6$-$C_{40}$-Aryloxy-, $C_7$-$C_{40}$-Alkylaryloxy- oder $C_7$-$C_{40}$-Arylalkyloxy-Gruppe ist, oder R' ist eine heteroatomhaltige Gruppe wie -SO-, $-SO_2-$, -S-, -CO-, $-CO_2-$, -O-, -NH- oder -PH-,
n ist bevorzugt 0 oder 1,
B ist bevorzugt $NH_2$, $PH_2$, eine $C_1$-$C_{40}$-Alkyl-, $C_1$-$C_{40}$-Halogen-Alkyl-, $C_6$-$C_{40}$-Aryl-, $C_6$-$C_{40}$-Halogen-Aryl-, $C_7$-$C_{40}$-Arylalkyl- oder $C_7$-$C_{40}$-Halogen-Arylalkyl-, $C_2$-$C_{40}$-Alkinyl-, $C_2$-$C_{40}$-Halogen-Alkinyl-, $C_2$-$C_{40}$-Alkenyl-, $C_2$-$C_{40}$-Halogen-Alkenyl-, $C_6$-$C_{40}$-Aryloxy-, $C_7$-$C_{40}$-Alkylaryloxy- oder eine $C_7$-$C_{40}$-Arylalkyloxy-Gruppe, $-NR''_2$, -COR''-, $-CO_2R''-$, $-PR''_2$, $-P(O)R''_2$, $-Si(R'')_2-O-Si(R'')_3-$, $-C-O-SiR''_3-$, $-CONR''_2$, -SOR''; $-SO_2R''-$, $-SO_2R''$, -SR-, -OR'', -NHR'' oder -PHR'', wobei R'' eine $C_1$-$C_{40}$-Alkyl-, $C_1$-$C_{40}$-Halogen-Alkyl-, $C_6$-$C_{40}$-Aryl-, $C_6$-$C_{40}$-Halogen-Aryl-, $C_7$-$C_{40}$-Arylalkyl- oder $C_7$-$C_{40}$-Halogen-Arylalkyl-, $C_2$-$C_{40}$-Alkinyl-, $C_2$-$C_{40}$-Halogen-Alkinyl-, $C_2$-$C_{40}$-Alkenyl-, $C_2$-$C_{40}$-Halogen-Alkenyl-, $C_7$-$C_{40}$-Aryloxy-, $C_7$-$C_{40}$-Alkylaryloxy- oder eine $C_7$-$C_{40}$-Arylalkyloxy-Gruppe ist, und
p ist bevorzugt eine ganze Zahl von 0 bis 6.

Wenn q gleich 0 ist, bindet R' an den Träger, wenn q gleich 1 ist, bindet Q an den Träger. B sind Substituenten von Q, die nicht an den Träger binden.

Besonders bevorzugt ist in Formel (III) Q gleich Si und q = 1.

R in Formel (II) ist bevorzugt ein $C_1$-$C_{40}$-Kohlenwasserstoffrest, der mit Halogenen wie Fluor, Chlor, Brom oder Jod halogeniert bevorzugt perhalogeniert sein kann, insbesondere eine halogenierte, insbesondere perhalogenierte $C_1$-$C_{30}$-Alkylgruppe wie Trifluormethyl, Pentachlorethyl, Heptafluorisopropyl oder Monofluorisobutyl oder eine halogenierte, insbesondere perhalogenierte $C_6$-$C_{30}$-Arylgruppe wie Pentafluorphenyl, Heptachlornaphthyl, Heptafluornaphthyl, Heptafluortolyl, 3,5-bis(trifluor-methyl)phenyl, 2,4,6-tris(trifluormethyl)phenyl oder 2,2'(octafluor)biphenyl.

X in Formel (II) ist bevorzugt eine $C_6$-$C_{30}$-Arylengruppe, eine $C_2$-$C_{30}$-Alkenylengruppe, eine $C_2$-$C_{30}$-Alkinylengruppe, eine $C_6$-$C_{30}$-Arentriylgruppe, eine $C_2$-$C_{30}$-Alkentriylgruppe oder eine $C_2$-$C_{30}$-Alkintriylgruppe, die halogeniert, insbesondere perhalogeniert sein können.

Bevorzugt ist j = 1 oder 2, wenn M ein Element der Gruppe IIa ist; j = 2 oder 3, wenn M ein Element der Gruppe IIIa ist; j = 3 oder 4, wenn M ein Element der Gruppe IVa ist und j = 4 oder 5, wenn M ein Element der Gruppe Va ist. Besonders bevorzugt ist M ein Element der Gruppe IIIa, insbesondere Bor. i ist bevorzugt eine ganze Zahl von 0 bis 6, besonders bevorzugt 0 oder 1. a und b sind bevorzugt 0, 1 oder 2 und c ist bevorzugt 1 oder 2. g, h, k und r sind bevorzugt 0 oder 1.

Als $A^{c+}$ in Formel (I) sind Kationen der Gruppe Ia, IIa, IIIa des Periodensystems der Elemente, ein Carbenium-, Oxonium- oder Sulfonium-Kation oder eine quartäre Ammonium-Verbindung bevorzugt, insbesondere sind Carbenium-Ionen ($R_3C^+$) oder quartäre AmmoniumIonen mit einer aciden H-Funktion ($R_3NH^+$) bevorzugt. Besonders bevorzugt sind quartäre Ammoniumsalze mit aciden H-Funktionen.

Für den Fall, daß a ≥ 1 und alle M gleich Bor sind, ist es bevorzugt, daß die Anzahl der Boratome ≥ 4, besonders bevorzugt 2 ist. Eine besonders bevorzugte Ausführungsform stellt die geträgerte neutrale chemische Verbindung der Formel (IV) dar,

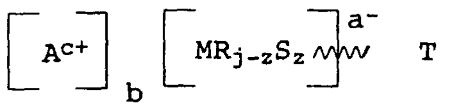

(IV)

worin

M ein Element der Gruppe IIIa des Periodensystems der Elemente ist,

R unabhängig voneinander gleich oder verschieden eine $C_1$-$C_4$-Halogen-Alkyl-, $C_6$-$C_{40}$-Halogen-Aryl-, oder $C_7$-$C_{40}$-Halogen-Arylalkyl-Gruppe, ist

j eine ganze Zahl von 1 bis 4 ist,

z 0, 1 oder 2 ist,

T und

S die oben genannte Bedeutung haben,

a gleich 0, ist,

A ein Kation der Gruppe Ia, IIa, IIIa des Periodensystems der Elemente, ein Carbenium-, Oxonium- oder Sulfonium-Kation oder eine quartäre Ammonium-Verbindung sein kann,

b gleich 0, ist und

c gleich 1 oder 2 ist.

Der Träger T ist bevorzugt ein poröser anorganischer oder organischer Feststoff. An seine Oberfläche sind die y Einheiten N kovalent gebunden, gegebenenfalls über einen oder mehrere Spacer S. Bevorzugt enthält der Träger mindestens ein anorganisches Oxid, wie Siliziumoxid, Aluminiumoxid, Zeolithe, MgO, $ZrO_2$, $TiO_2$ $B_2O_3$, CaO, ZnO, $ThO_2$, $Na_2CO_3$, $K_2CO_3$, $CaCO_3$, $MgCO_3$, $Na_2SO_4$, $Als(SO_4)_3$, $BaSO_4$, $KNO_3$, $Mg(NO_3)_2$, $Al(NO_3)_3$ ,$Na_2O$, $K_2O$, oder $Li_2O$, insbesondere Siliziumoxid und/oder Aluminiumoxid. Der Träger kann auch mindestens ein Polymer enthalten, z.B. ein Homo- oder Copolymer,ein vernetztes Polymer oder Polymerblends. Beispiele für Polymere sind Polyethylen, Polypropylen, Polybuten, Polystyrol, mit Divinylbenzol vernetztes Polystyrol, Polyvinylchlorid, Acryl-Butadien-Styrol-Copolymer, Polyamid, Polymethacrylat, Polycarbonat, Polyester, Polyacetal oder Polyvinylalkohol.

Der Träger kann eine spezifische Oberfläche im Bereich von 10 bis 1000 $m^2/g$, bevorzugt von 150 bis 500 $m^2/g$ aufweisen. Die mittlere Partikelgröße des Trägers kann 1 bis 500 μm, bevorzugt 5 bis 350 μm, besonders bevorzugt 10 bis 200 μm betragen.

Bevorzugt ist der Träger porös mit einem Porenvolumen des Trägers von 0,5 bis 4,0 ml/g, bevorzugt 1,0 bis 3,5 ml/g. Ein poröser Träger weist einen gewissen Anteil an Hohlräumen (Porenvolumen) auf. Die Form der Poren ist meist unregelmäßig, häufig sphärisch ausgebildet. Die Poren können durch kleine Porenöffnungen miteinander verbunden sein. Der Porendurchmesser beträgt vorzugsweise etwa 2 bis 50 nm. Die Partikelform des porösen Trägers kann irregulär oder sphärisch sein. Der Träger kann thermisch, chemisch oder mechanisch nachbehandelt werden. Hierdurch kann die Partikelform des Trägers beeinflußt werden. Die Teilchengröße des Trägers kann z. B. durch kryogene Mahlung und/oder Siebung beliebig eingestellt werden.

Zur Herstellung der erfindungsgemäßen geträgerten chemischen Verbindung kann ein Trägerausgangsmaterial T-H mit mindestens einer Ausgangsverbindung N-G umgesetzt werden. Dabei trägt die Oberfläche des Trägerausgangsmaterials funktionelle Gruppen H, welche bevorzugt die folgende Formel (V) aufweisen:

$$-(D)_s(E)_t \qquad (V),$$

wobei

D gleich Al, B, C, Si, N, P, O oder S ist,
s gleich 0 oder 1 ist,
E gleich oder verschieden ein Halogen, eine Hydroxy-, Carbonsäurechlorid-, Carbonsäureamid-, Arylhalogenid-, Benzylhalogenid-, Alkylhalogenid-, Alkoxy-, Aryloxy-, Alkylamin-, Arylamin-, Alkylphosphin-, Arylphosphin-, Thioether-, Thio-, Cyanat-, Isocyanat-, Cycloalkadienyl-, Sulfonsäure-, Aldehyd-, Keto-, Alkenyl- oder Aryllithiumgruppe oder eine Cycloalkadienyl- oder Cycloalkadienyllithiumgruppen enthaltende kohlenstoffhaltige Gruppe sind und
t gleich 1, 2, 3, 4 oder 5 ist.

Die funktionellen Gruppen H des Trägerausgangsmaterials T-H können durch chemische Funktionalisierung mit reaktiven Verbindungen eingefügt werden oder schon ursprünglich vorhanden sein. Das Trägerausgangsmaterial T-H kann auch durch Erhitzen bei Temperaturen von 50°C bis 1000°C im Inertgasstrom oder im Vakuum bei 0.01 bar bis 0.001 bar oder durch chemische Inertisierung durch Umsetzung mit Aluminium-, Magnesium-, Bor- oder Lithiumalkylen oder durch chemische Funktionalisierung mit reaktiven Verbindungen behandelt werden.

Beispielsweise können Trägerausgangsmaterialien aus $SiO_2$ in folgender Weise funktionalisiert werden. Eine Suspension des $SiO_2$ (vorbehandelt: 4h; 200°C, 0.01 bar) in einem geeigneten Lösungsmittel, wie Pentan, Hexan, Heptan, Toluol oder Dichlormethan wird mit einer eine funktionelle Gruppe enthaltenden Silylchloridverbindung umgesetzt, mehrere Stunden bei Siedetemperatur erhitzt und dann mit einem geeigneten Lösungsmittel gewaschen. Die Reaktionstemperatur beträgt bevorzugt mindestens 50°C, insbesondere 50°C bis 150°C. Die Reaktionszeit beträgt 1 bis 600 Minuten, bevorzugt 1 bis 2 Stunden. Vorzugsweise wird die Silylchloridverbindung im äquimolaren Verhältnis bezogen auf den Anteil an Hydroxylgruppen auf der Oberfläche des $SiO_2$ eingesetzt. Die Reaktion wird unter Inertbedingungen durchgeführt. Für den Waschvorgang geeignete Lösungsmittel sind z.B. Pentan, Hexan, Heptan, Toluol oder

Dichlormethan gegebenenfalls mit Aminen versetzt, um entstandenes HCl abzufangen. Danach werden im Vakuum bei 20 bis 200°C und 0.01 bis 0.001 bar Lösungsmittelreste entfernt.

In der Ausgangsverbindung N-G ist N wie in Formel (II) definiert und G sind Abgangsgruppen wie $-OR^2$ , Hal, $-NR^2_2$, -H, -CO, $-SR^2_2$, $-SO_2$ oder $-PR^2_3$, worin $R^2$ wie R definiert ist, welche bei Reaktion mit dem Trägerausgangsmaterial T-H unter Ausbildung einer oder mehrerer kovalenter Bindungen zwischen N und T abgespalten werden.

Beispiele für Ausgangsverbindungen N-G sind:

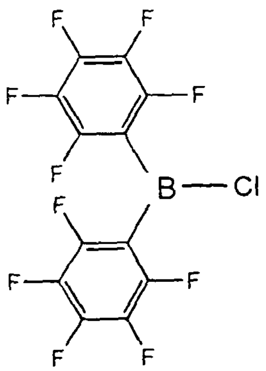

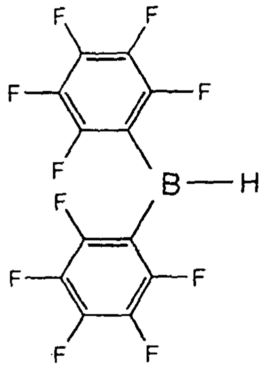

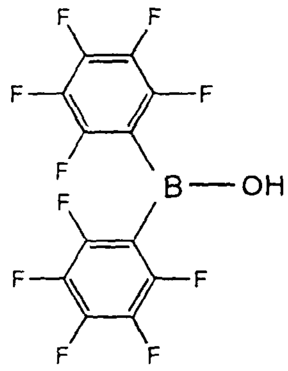

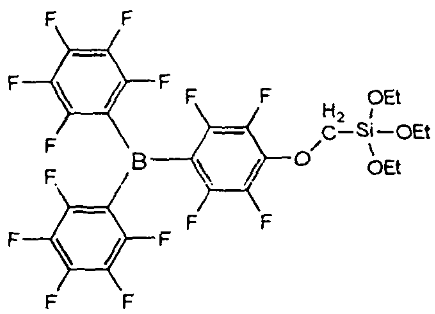

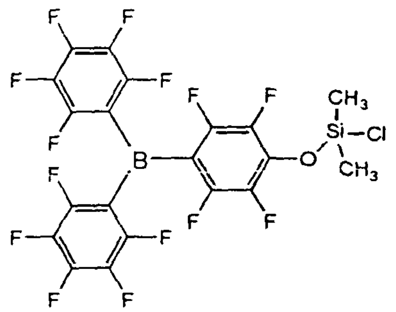

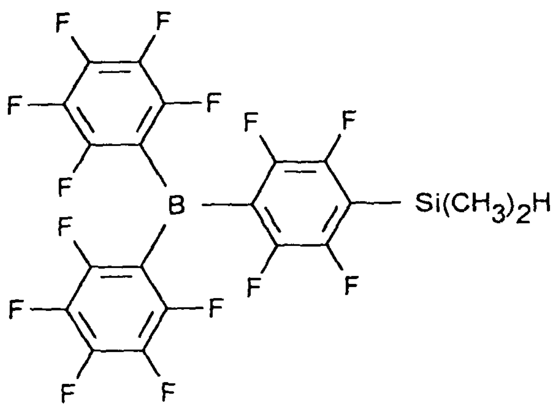

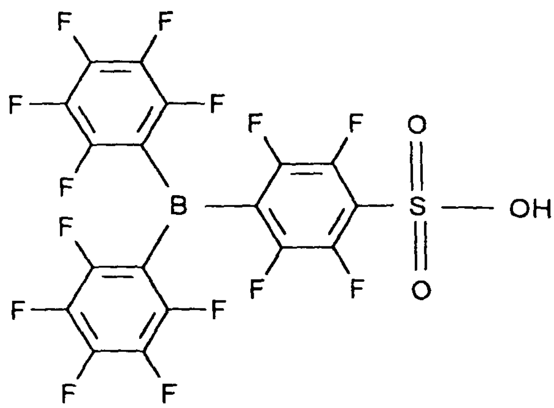

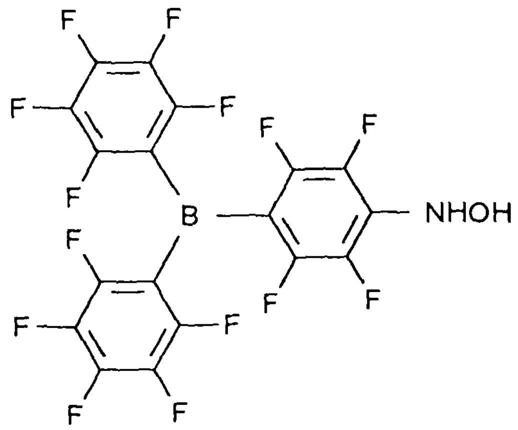

Die Herstellung von Ausgangsverbindungen N-G kann z.B. nach folgendem Reaktionsschema ablaufen:

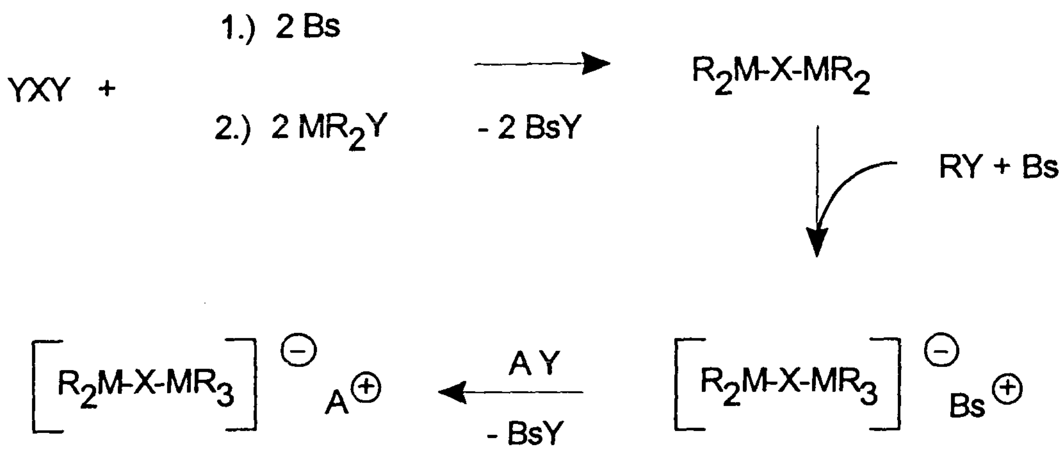


Hierbei ist

X eine $C_1$-$C_{40}$-kohlenstoffhaltige Gruppe sind wie eine $C_1$-$C_{40}$-Alkylen-, $C_1$-$C_{40}$-Halogen-Alkylen-, $C_6$-$C_{40}$-Arylen-, $C_6$-$C_{40}$-Halogen-Arylen-, $C_7$-$C_{40}$-Arylalkylen- oder $C_7$-$C_{40}$-Halogen-Arylalkylen-, $C_2$-$C_{40}$-Alkinylen-, $C_2$-$C_{40}$-Halogen-Alkinylen-, $C_2$-$C_{40}$-Alkenylen- oder $C_2$-$C_{40}$-Halogen-AlkenylenGruppe,

Y unabhängig voneinander gleich oder verschieden eine Abgangsgruppe, bevorzugt ein Wasserstoff- oder Halogen-Atom,

R unabhängig voneinander gleich oder verschieden ein Halogenatom oder eine $C_1$-$C_{40}$-kohlenstoffhaltige Gruppe wie eine $C_1$-$C_{40}$-Alkyl-, $C_1$-$C_{40}$-Halogen- Alkyl-, $C_6$-$C_{40}$-Aryl-, $C_6$-$C_{40}$-Halogen-Aryl-, $C_7$-$C_{40}$-Arylalkyl- oder $C_7$-$C_{40}$-Halogen-Arylalkyl-Gruppe,

Bs eine Base, bevorzugt eine Organolithium-Verbindung oder eine Grignard- Verbindung,

M gleich oder verschieden sind und ein Element der Gruppen IIa, IIIa, IVa oder Va des Periodensystems der Elemente bedeuten und

A ein Kation der Gruppe Ia, IIa, IIIa, des Periodensystems der Elemente, ein Carbenium-, Oxonium- oder Sulfonium-Kation oder eine quartäre Ammonium-Verbindung ist,

Die Umsetzung von T-H mit N-G kann in einem geeigneten Lösungsmittel wie Pentan, Heptan, Toluol, Dichlormethan oder Dichlorbenzol erfolgen, in dem das Trägerausgangsmaterial T-H suspendiert wird und eine Lösung der Ausgangsverbindung N-G zugetropft wird. Oder das Trägerausgangsmaterial T-H wird unter Rühren mit einer Lösung der Verbindung N-G so umgesetzt, das 50 bis 400% des Porenvolumens der Trägerkomponente gefüllt werden. Danach kann ein Waschvorgang wie oben beschrieben erfolgen und Lösungsmittelreste können im Vakuum bei 20 bis 200°C und 0,01 bis 0,001 bar entfernt werden. Die Herstellung der erfindungsgemäßen geträgerten chemischen Verbindung wird bei -80 bis 200°C, bevorzugt bei -20 bis 100°C und einer Kontaktzeit zwischen 15 Minuten und 25 Stunden, bevorzugt zwischen 15 Minuten und 5 Stunden durchgeführt.

Anschließend kann ein Kation $A^{c+}$ eingeführt werden. Dazu kann das Reaktionsprodukt von T-H und N-G mit einer kohlenstoffhaltigen Alkali- oder Erdalkalimetallverbindung wie Lithium-Pentafluorobenzol oder Lithium-tris(trifluoromethyl)benzol umgesetzt werden und anschließend mit einer Verbindung A-V umgesetzt werden, worin A wie in Formel (I) definiert ist und V eine Abgangsgruppe ist, die wie G definiert ist.

Die erfindungsgemäße, geträgerte chemische Verbindung kann zusammen mit einer Übergangsmetallverbindung als Katalysatorsystem zur Olefinpolymerisation verwendet werden. Bei der Umsetzung der geträgerten chemischen Verbindung der allgemeinen Formel (I) mit einer durch Liganden L stabilisierten Übergangsmetallverbindung $M^1L_x$ (hierin ist $M^1$ ein Übergangsmetall, L ein Ligand und x eine ganze Zahl von 1 bis 6, die von der Wertigkeit von $M^1$ abhängt) entstehen b neutrale Verbindungen AL und b·c katalytisch aktive Verbindungen

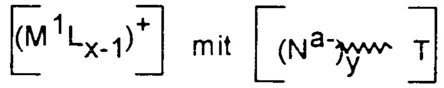
mit

als Cokatalysatorkomponente.

Die Übergangsmetallverbindung $M^1L_x$ enthält mindestens ein Metallzentralatom $M^1$, an das mindestens ein π-Ligand, z. B. ein Cyclopentadienylligand gebunden ist. Darüber hinaus können als Liganden L auch Substituenten, wie Halogen, oder kohlenstoffhaltige Gruppen, z.B. Alkyl-, Alkoxy- oder Aryl-Gruppen an das Metallzentralatom $M^1$ gebunden sein. Das Metallzentralatom ist bevorzugt ein Element der III., IV., V. oder VI. Nebengruppe des Periodensystems der Elemente, insbesondere aus der IV. Nebengruppe des Periodensystems der Elemente, wie Ti, Zr oder Hf. Bevorzugt ist die Übergangsmetallverbindung $M^1L_x$ ein Metallocen, insbesondere ein chirales Metallocen. Unter Cyclopentadienylligand sind unsubstituierte Cyclopentadienylreste und substituierte Cyclopentadienylreste wie Methylcyclopentadienyl, Indenyl, 2-Methylindenyl, 2-Methyl-4-phenylindenyl, Tetrahydroindenyl, Benzoindenyl, Fluorenyl, Benzofluorenyl, Tetrahydrofluorenyl, Octahydrofluorenylreste zu verstehen. Die π-Liganden, z. B. Cyclopentadienylliganden können verbrückt oder unverbrückt sein, wobei einfache und mehrfache Verbrückungen - auch über Ringsysteme - möglich sind. Die Bezeichnung Metallocen umfaßt auch Verbindungen mit mehr als einem Metallocenfragment, sogenannte mehrkernige Metallocene. Diese können beliebige Substitutionsmuster und Verbrückungsvarianten aufweisen. Die einzelnen Metallocenfragmente solcher mehrkerniger Metallocene können sowohl gleichartig, als auch voneinander verschieden sein. Beispiele solcher mehrkerniger Metallocene sind z. B. beschrieben in (EP-A-632063, JP-A-04/80214, JP-A-04/85310, EP-A-654476).

Besonders bevorzugt sind unverbrückte oder verbrückte Metallocene der Formel VI

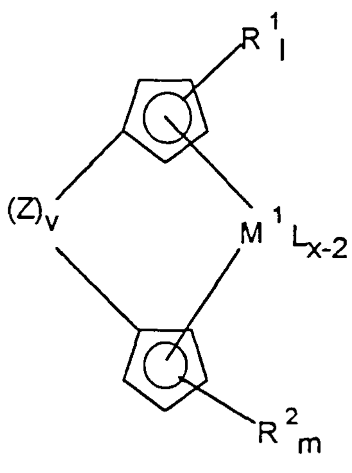
(VI)

, worin

$M^1$ ein Metall der III., IV., V. oder VI. Nebengruppe des Periodensystems der Elemente ist, insbesondere Zr oder Hf,

$R^1$ gleich oder verschieden sind und ein Wasserstoffatom,

$$SiR^3_3,$$

worin $R^3$ gleich oder verschieden ein Wasserstoffatom oder eine $C_1$-$C_{40}$-kohlenstoffhaltige Gruppe wie $C_1$-$C_{20}$-Alkyl, $C_1$-$C_{10}$-Fluoralkyl, $C_1$-$C_{10}$-Alkoxy, $C_6$-$C_{20}$-Aryl, $C_6$-$C_{10}$-Fluoraryl, $C_6$-$C_{10}$-Aryloxy, $C_2$-$C_{10}$-Alkenyl, $C_7$-$C_{40}$-Arylalkyl, $C_7$-$C_{40}$-Alkylaryl oder $C_8$-$C_{40}$-Arylalkenyl sind, oder eine $C_1$-$C_{30}$ - kohlenstoffhaltige Gruppe wie $C_1$-$C_{25}$-Alkyl, z. B. Methyl, Ethyl, tert.-Butyl, Cyclohexyl oder Octyl, $C_2$-$C_{25}$-Alkenyl, $C_3$-$C_{15}$-Alkylalkenyl, $C_6$-$C_{24}$-Aryl, $C_5$-$C_{24}$-Heteroaryl wie Pyridyl, Furyl oder Chinolyl, $C_7$-$C_{30}$-Arylalkyl, $C_7$-$C_{30}$-Alkylaryl, fluorhaltiges $C_1$-$C_{25}$-Alkyl, fluorhaltiges $C_6$-$C_{24}$-Aryl, fluorhaltiges $C_7$-$C_{30}$-Arylalkyl, fluorhaltiges $C_7$-$C_{30}$-Alkylaryl oder $C_1$-$C_{12}$-Alkoxy ist, oder zwei oder mehrere Reste $R^1$ können so miteinander verbunden sein, daß die Reste $R^1$ und die sie verbindenden Atome des Cyclopentadienylringes ein $C_4$-$C_{24}$-Ringsystem bilden, welches seinerseits substituiert sein kann,

$R^2$ gleich oder verschieden sind und ein Wasserstoffatom,

$$SiR^3_3,$$

worin $R^3$ gleich oder verschieden ein Wasserstoffatom oder eine $C_1$-$C_{40}$-kohlenstoffhaltige Gruppe wie $C_1$-$C_{20}$-Alkyl, $C_1$-$C_{10}$-Fluoralkyl, $C_1$-$C_{10}$-Alkoxy, $C_6$-$C_{14}$-Aryl, $C_6$-$C_{10}$-Fluoraryl, $C_6$-$C_{10}$-Aryloxy, $C_2$-$C_{10}$-Alkenyl, $C_7$-$C_{40}$-Arylalkyl, $C_7$-$C_{40}$-Alkylaryl oder $C_8$-$C_{40}$-Arylalkenyl sind, oder eine $C_1$-$C_{30}$ - kohlenstoffhaltige Gruppe wie $C_1$-$C_{25}$-Alkyl, z. B. Methyl, Ethyl, tert.-Butyl, Cyclohexyl oder Octyl, $C_2$-$C_{25}$-Alkenyl, $C_3$-$C_{15}$-Alkylalkenyl, $C_6$-$C_{24}$-Aryl, $C_5$-$C_{24}$-Heteroaryl, z. B. Pyridyl, Furyl oder Chinolyl, $C_7$-$C_{30}$-Arylalkyl, $C_7$-$C_{30}$-Alkylaryl, fluorhaltiges $C_1$-$C_{25}$-Alkyl, fluorhaltiges $C_6$-$C_{24}$-Aryl, fluorhaltiges $C_7$-$C_{30}$-Arylalkyl, fluorhaltiges $C_7$-$C_{30}$-Alkylaryl oder $C_1$-$C_{12}$-Alkoxy ist, oder zwei oder mehrere Reste $R^2$ können so miteinander verbunden sein, daß die Reste $R^2$ und die sie verbindenden Atome des Cyclopentadienylringes ein $C_4$-$C_{24}$-Ringsystem bilden, welches seinerseits substituiert sein kann,

l gleich 5 für v = 0, und 1 gleich 4 für v = 1 ist,

m gleich 5 für v = 0, und m gleich 4 für v = 1 ist,

L gleich oder verschieden sind und ein Halogenatom oder einen kohlenwasserstoffhaltigen Rest mit 1-20 Kohlenstoffatomen bedeuten, z. B. $C_1$-$C_{20}$-Alkyl, $C_2$-$C_{20}$-Alkenyl, $C_1$-$C_{20}$-Alkoxy, $C_6$-$C_{14}$-Aryloxy oder $C_6$-$C_{40}$-Aryl,

x eine ganze Zahl von 1 bis 6 ist, wobei im Falle von $M^1$ = Ti, Zr oder Hf x bevorzugt gleich 4 ist,

Z ein verbrückendes Strukturelement zwischen den beiden Cyclopentadienylringen bezeichnet, und v ist 0 oder 1.

Beispiele für Z sind Gruppen $M^2R^4R^5$, worin $M^2$ Kohlenstoff, Silizium, Germanium oder Zinn ist und $R^4$ und $R^5$ gleich oder verschieden eine $C_1$-$C_{20}$-kohlenwasserstoffhaltige Gruppe wie $C_1$-$C_{10}$-Alkyl, $C_6$-$C_{14}$-Aryl oder Trimethylsilyl bedeuten. Bevorzugt ist Z gleich $CH_2$, $CH_2CH_2$, $CH(CH_3)CH_2$, $CH(C_4H_9)C(CH_3)_2$, $C(CH_3)_2$, $(CH_3)_2Si$, $(CH_3)_2Ge$, $(CH_3)_2Sn$, $(C_6H_5)_2Si$, $(C_6H_5)(CH_3)Si$, $(C_6H_5)_2Ge$, $(C_6H_5)_2Sn$, $(CH_2)_4Si$, $CH_2Si(CH_3)_2$, o-$C_6H_4$ oder 2,2'-$(C_6H_4)_2$. Z kann auch mit einem oder mehreren Resten $R^1$ und/oder $R^2$ ein mono- oder polycyclisches Ringsystem bilden.

Bevorzugt sind chirale verbrückte Metallocene der Formel VI, insbesondere solche in denen v gleich 1 ist und einer oder beide Cyclopentadienylringe so substituiert sind, daß sie einen Indenylring darstellen. Der Indenylring ist bevorzugt substituiert, insbesondere in 2-, 4-, 2,4,5-, 2,4,6-, 2,4,7 oder 2,4,5,6-Stellung, mit $C_1$-$C_{20}$-kohlenstoffhaltigen Gruppen, wie $C_1$-$C_{10}$-Alkyl oder $C_6$-$C_{20}$-Aryl, wobei auch zwei oder mehrere Substituenten des Indenylrings zusammen ein Ringsystem bilden können.

Die nachfolgenden Beispiele für Metallocene dienen der Illustration der vorliegenden Erfindung, haben aber keinen einschränkenden Charakter:

Bis(cyclopentadienyl)zirkoniumdimethyl
Bis(indenyl)zirkoniumdimethyl
Bis(fluorenyl)zirkoniumdimethyl
(Indenyl)(fluorenyl)zirkoniumdimethyl
(3-Methyl-5-naphthylindenyl)(2,7-di-tert-butylfluorenyl)zirkoniumdimethyl
(3-Methyl-5-naphthylindenyl)(3,4,7-trimethoxyfluorenyl)zirkoniumdimethyl
(Pentamethylcyclopentadienyl)(tetrahydroindenyl)zirkoniumdimethyl
(Cyclopentadienyl)(1-octen-8-ylcyclopentadienyl)zirkoniumdimethyl
(Indenyl)(1-buten-4-ylcyclopentadienyl)zirkoniumdimethyl
[1,3-Bis(trimethylsilyl)cyclopentadienyl](3,4-benzofluorenyl)zirkoniumdimethyl
Bis(cyclopentadienyl)titandimethyl
Dimethylsilandiylbis(indenyl)zirkoniumdimethyl
Dimethylsilandiylbis(tetrahydroindenyl)zirkoniumdimethyl
Dimethylsilandiyl(cyclopentadienyl)(indenyl)zirkoniumdimethyl
Dimethylsilandiylbis(2-methylindenyl)zirkoniumdimethyl
Dimethylsilandiylbis(2-ethylindenyl)zirkoniumdimethyl
Dimethylsilandiylbis(2-methyl-4,5-benzoindenyl)zirkoniumdimethyl
Dimethylsilandiylbis(2-ethyl-4,5-benzoindenyl)zirkoniumdimethyl
Dimethylsilandiylbis(4,5-dihydro-8-methyl-7H-cyclopent[e]acenaphthylen-7-yliden)zirkoniumdimethyl
Dimethylsilandiyl(2-methyl-4,5-benzoindenyl)(2-methyl-4-phenylindenyl)zirkoniumdimethyl
Dimethylsilandiyl(2-ethyl-4,5-benzoindenyl)(2-methyl-4-phenylindenyl)zirkoniumdimethyl
Dimethylsilandiyl(2-methyl-4,5-benzoindenyl)(2-ethyl-4-phenylindenyl)zirkoniumdimethyl
Dimethylsilandiyl(2-ethyl-4,5-benzoindenyl)(2-ethyl-4-naphthylindenyl)zirkoniumdimethyl
Dimethylsilandiyl(2-methylindenyl) (4-phenylindenyl)zirkoniumdimethyl
Dimethylsilandiylbis(2-methyl-4-phenylindenyl)zirkoniumdimethyl
Dimethylsilandiylbis(2-ethyl-4-phenylindenyl)zirkoniumdimethyl
Dimethylsilandiylbis(2-methyl-4,6-diisopropylindenyl)zirkoniumdimethyl
Dimethylsilandiylbis(2-ethyl-4,6-diisopropylindenyl)zirkoniumdimethyl
Dimethylsilandiylbis(2-methyl-4-naphthylindenyl)zirkoniumdimethyl
Dimethylsilandiylbis(2-ethyl-4-naphthylindenyl)zirkoniumdimethyl
Methylphenylsilandiylbis(indenyl)zirkoniumdimethyl
Methylphenylsilandiyl(cyclopentadienyl)(indenyl)zirkoniumdimethyl
Methylphenylsilandiylbis(tetrahydroindenyl)zirkoniumdimethyl
Methylphenylsilandiylbis(2-methylindenyl)zirkoniumdimethyl
Methylphenylsilandiylbis(2-ethylindenyl)zirkoniumdimethyl
Methylphenylsilandiylbis(2-methyl-4,5-benzoindenyl)zirkoniumdimethyl
Methylphenylsilandiylbis(2-ethyl-4,5-benzoindenyl)zirkoniumdimethyl
Methylphenylsilandiylbis(4,5-dihydro-8-methyl-7H-cyclopent[e]acenaphthylen-7-yliden)zirkoniumdimethyl
Methylphenylsilandiyl(2-methyl-4, 5-benzoindenyl)(2-methyl-4-phenylindenyl)zirkoniumdimethyl
Methylphenylsilandiyl(2-ethyl-4,5-benzoindenyl)(2-methyl-4-phenylindenyl)zirkoniumdimethyl
Methylphenylsilandiyl(2-methyl-4,5-benzoindenyl)(2-ethyl-4-phenylindenyl)zirkoniumdimethyl
Methylphenylsilandiyl(2-ethyl-4,5-benzoindenyl)(2-ethyl-4-naphthylindenyl)zirkoniumdimethyl
Methylphenylsilandiyl(2-methylindenyl) (4-phenylindenyl)zirkoniumdimethyl
Methylphenylsilandiylbis(2-methyl-4-phenylindenyl)zirkoniumdimethyl
Methylphenylsilandiylbis(2-ethyl-4-phenylindenyl)zirkoniumdimethyl
Methylphenylsilandiylbis(2-methyl-4,6-diisopropylindenyl)zirkoniumdimethyl
Methylphenylsilandiylbis(2-ethyl-4,6-diisopropylindenyl)zirkoniumdimethyl
Methylphenylsilandiylbis(2-methyl-4-naphthylindenyl)zirkoniumdimethyl
Methylphenylsilandiylbis(2-ethyl-4-naphthylindenyl)zirkoniumdimethyl
Diphenylsilandiylbis(indenyl)zirkoniumdimethyl
Diphenylsilandiylbis(2-methylindenyl)zirkonlumdimethyl
Diphenylsilandiylbis(2-ethylindenyl)zirkoniumdimethyl
Diphenylsilandiyl(cyclopentadienyl)(indenyl)zirkoniumdimethyl
Diphenylsilandiylbis(2-methyl-4,5-benzoindenyl)zirkoniumdimethyl
Diphenylsilandiylbis(2-ethyl-4,5-benzoindenyl)zirkoniumdimethyl
Diphenylsilandiyl(2-methyl-4,5-benzoindenyl)(2-methyl-4-phenylindenyl)zirkoniumdimethyl
Diphenylsilandiyl(2-ethyl-4,5-benzoindenyl)(2-methyl-4-phenylindenyl)zirkoniumdimethyl
Diphenylsilandiyl(2-methyl-4,5-benzoindenyl)(2-ethyl-4-phenylindenyl)zirkoniumdimethyl

Diphenylsilandiyl(2-ethyl-4,5-benzoindenyl)(2-ethyl-4-naphthylindenyl)zirkoniumdimethyl
Diphenylsilandiyl(2-methylindenyl)(4-phenylindenyl)zirkoniumdimethyl
Diphenylsilandiylbis(2-methyl-4-phenylindenyl)zirkoniumdimethyl
Diphenylsilandiylbis(2-ethyl-4-phenylindenyl)zirkoniumdimethyl
Diphenylsilandiylbis(2-methyl-4, 6-diisopropylindenyl)zirkoniumdimethyl
Diphenylsilandiylbis(2-ethyl-4,6-diisopropylindenyl)zirkoniumdimethyl
Diphenylsilandiylbis(2-methyl-4-naphthylindenyl)zirkoniumdimethyl
Diphenylsilandiylbis(2-ethyl-4-naphthylindenyl)zirkoniumdimethyl
1-Silacyclopentan-1,1-bis(indenyl)zirkoniumdimethyl
1-Silacyclopentan-1,1-bis(2-methylindenyl)zirkoniumdimethyl
1-Silacyclopentan-1,1-bis(2-ethylindenyl)zirkoniumdimethyl
1-Silacyclopentan-1,1-bis(2-methyl-4,5-benzoindenyl)zirkoniumdimethyl
1-Silacyclopentan-1,1-bis(2-ethyl-4,5-benzoindenyl)zirkoniumdimethyl
1-Silacyclopentan-1-(2-methyl-4,5-benzoindenyl)-1-(2-methyl-4-phenylindenyl)zirkoniumdimethyl
1-Silacyclopentan-1-(2-ethyl-4,5-benzoindenyl)-1-(2-methyl-4-phenylindenyl)zirkoniumdimethyl
1-Silacyclopentan-1-(2-methyl-4, 5-benzoindenyl)-1-(2-ethyl-4-phenylindenyl)zirkoniumdimethyl
1-Silacyclopentan-1-(2-ethyl-4, 5-benzoindenyl)-1-(2-ethyl-4-naphthylindenyl)zirkoniumdimethyl
1-Silacyclopentan-1-(2-methylindenyl)-1-(4-phenylindenyl)zirkoniumdimethyl
1 -Silacyclopentan-1, 1-bis(2-methyl-4-phenylindenyl)zirkoniumdimethyl
1-Silacyclopentan-1,1-bis(2-ethyl-4-phenylindenyl)zirkoniumdimethyl
1-Silacyclopentan-1,1-bis(2-methyl-4,6-diisopropylindenyl)zirkoniumdimethyl
1-Silacyclopentan-1,1-bis(2-ethyl-4, 6-diisopropylindenyl)zirkoniumdimethyl
1-Silacyclopentan-1,1-bis(2-methyl-4-naphthylindenyl)zirkoniumdimethyl
1-Silacyclopentan-1,1-bis(2-ethyl-4-naphthylindenyl)zirkoniumdimethyl
Ethylen-1,2-bis(indenyl)zirkoniumdimethyl
Ethylen-1,2-bis(tetrahydroindenyl)zirkoniumdimethyl
Ethylen-1-cyclopentadienyl-2-(1-indenyl)zirkoniumdimethyl
Ethylen-1-cyclopentadienyl-2-(2-indenyl)zirkoniumdimethyl
Ethylen-1-cyclopentadienyl-2-(2-methyl-1-indenyl)zirkoniumdimethyl
Ethylen-1,2-bis(2-methylindenyl)zirkoniumdimethyl
Ethylen-1,2-bis(2-ethylindenyl)zirkoniumdimethyl
Ethylen-1,2-bis(2-methyl-4,5-benzoindenyl)zirkoniumdimethyl
Ethylen-1,2-bis(2-ethyl-4,5-benzoindenyl)zirkoniumdimethyl
Ethylen-1,2-bis(4,5-dihydro-8-methyl-7H-cyclopent[e]acenaphthylen-7-yliden)zirkoniumdimethyl
Ethylen-1-(2-methyl-4,5-benzoindenyl)-2-(2-methyl-4-phenylindenyl)zirkoniumdimethyl
Ethylen-1-(2-ethyl-4, 5-benzoindenyl)-2-(2-methyl-4-phenylindenyl)zirkoniumdimethyl
Ethylen-1-(2-methyl-4,5-benzoindenyl)-2-(2-ethyl-4-phenylindenyl)zirkoniumdimethyl
Ethylen-1-(2-ethyl-4, 5-benzoindenyl)-2-(2-ethyl-4-naphthylindenyl)zirkoniumdimethyl
Ethylen-1-(2-methylindenyl)-2-(4-phenylindenyl)zirkoniumdimethyl
Ethylen-1,2-bis(2-methyl-4-phenylindenyl)zirkoniumdimethyl
Ethylen-1,2-bis(2-ethyl-4-phenylindenyl)zirkoniumdimethyl
Ethylen-1,2-bis(2-methyl-4,6-diisopropylindenyl)zirkoniumdimethyl
Ethylen-1,2-bis(2-ethyl-4,6-diisopropylindenyl)zirkoniumdimethyl
Ethylen-1,2-bis(2-methyl-4-naphthylindenyl)zirkoniumdimethyl
Ethylen-1,2-bis(2-ethyl-4-naphthylindenyl)zirkoniumdimethyl
Propylen-2,2-bis(indenyl)zirkoniumdimethyl
Propylen-2-cyclopentadienyl-2-(1-indenyl)zirkoniumdimethyl
Propylen-2-cyclopentadienyl-2-(4-phenyl-1-indenyl)zirkoniumdimethyl
Propylen-2-cyclopentadienyl-2-(9-fluorenyl)zirkoniumdimethyl
Propylen-2-cyclopentadienyl-2-(2,7-dimethoxy-9-fluorenyl)zirkoniumdimethyl
Propylen-2-cyclopentadienyl-2-(2,7-di-tert-butyl-9-fluorenyl)zirkoniumdimethyl
Propylen-2-cyclopentadienyl-2-(2,7-dibromo-9-fluorenyl)zirkoniumdimethyl
Propylen-2-cyclopentadienyl-2-(2,7-diphenyl-9-fluorenyl)zirkoniumdimethyl
Propylen-2-cyclopentadienyl-2-(2,7-dimethyl-9-fluorenyl)zirkoniumdimethyl
Propylen-2-(3-methylcyclopentadienyl)-2-(2,7-dibutyl-9-fluorenyl)zirkoniumdimethyl
Propylen-2-(3-tert-butylcyclopentadienyl)-2-(2,7-dibutyl-9-fluorenyl)zirkoniumdimethyl
Propylen-2-(3-trimethylsilylcyclopentadienyl)-2-(3, 6-di-tert-butyl-9-fluorenyl)zirkoniumdimethyl
Propylen-2-cyclopentadienyl-2-[2,7-bis(3-buten-1-yl)-9-fluorenyl]zirkoniumdimethyl

Propylen-2-cyclopentadienyl-2-(3-tert-butyl-9-fluorenyl)zirkoniumdimethyl
Propylen-2,2-bis(tetrahydroindenyl)zirkoniumdimethyl
Propylen-2,2-bis(2-methylindenyl)zirkoniumdimethyl
Propylen-2,2-bis(2-ethylindenyl)zirkoniumdimethyl
Propylen-2,2-bis(2-methyl-4,5-benzoindenyl)zirkoniumdimethyl
Propylen-2,2-bis(2-ethyl-4,5-benzoindenyl)zirkoniumdimethyl
Propylen-2,2-bis(4,5-dihydro-8-methyl-7H-cyclopent[e]acenaphthylen-7-yliden)zirkoniumdimethyl
Propylen-2-(2-methyl-4,5-benzoindenyl)-2-(2-methyl-4-phenylindenyl)zirkoniumdimethyl
Propylen-2-(2-ethyl-4,5-benzoindenyl)-2-(2-methyl-4-phenylindenyl)zirkoniumdimethyl
Propylen-2-(2-methyl-4, 5-benzoindenyl)-2-(2-ethyl-4-phenylindenyl)zirkoniumdimethyl
Propylen-2-(2-ethyl-4,5-benzoindenyl)-2-(2-ethyl-4-naphthylindenyl)zirkoniumdimethyl
Propylen-2-(2-methylindenyl)-2-(4-phenylindenyl)zirkoniumdimethyl
Propylen-2,2-bis(2-methyl-4-phenylindenyl)zirkoniumdimethyl
Propylen-2,2-bis(2-ethyl-4-phenylindenyl)zirkoniumdimethyl
Propylen-2,2-bis(2-methyl-4,6-diisopropylindenyl)zirkoniumdimethyl
Propylen-2,2-bis(2-ethyl-4,6-diisopropylindenyl)zirkoniumdimethyl
Propylen-2,2-bis(2-methyl-4-naphthylindenyl)zirkoniumdimethyl
Propylen-2,2-bis(2-ethyl-4-naphthylindenyl)zirkoniumdimethyl
1,6-Bis[methylsilylbis(2-methyl-4-phenylindenyl)zirkoniumdimethyl]hexan
1,6-Bis[methylsilylbis(2-methyl-4,5-benzoindenyl)zirkoniumdimethyl]hexan
1,6-Bis[methylsilylbis(2-ethyl-4-phenylindenyl)zirkoniumdimethyl]hexan
1,6-Bis[methylsilylbis(2-methyl-4-naphthylindenyl)zirkoniumdimethyl]hexan
1,6-Bis[methylsilylbis(2-methyl-4,6-diisopropylindenyl)zirkoniumdimethyl]hexan
1,6-Bis[methylsilyl(2-methyl-4-phenylindenyl)(4,5-benzoindenyl)zirkoniumdimethyl]hexan
1-[Methylsilylbis(tetrahydroindenyl)zirkoniumdimethyl]-6-[ethylstannyl(cyclopentadienyl)-(fluorenyl)zirkoniumdimethyl]hexan
1,6-Disila-1,1,6,6-tetramethyl-1,6-bis[methylsilylbis(2-methyl-4-phenylindenyl)zirkonium-dimethyl]hexan
1,4-Disila-1,4-bis[methylsilylbis(2-methyl-4-phenylindenyl)zirkoniumdimethyl]cyclohexan
[1,4-Bis(1-indenyl)-1,1,4,4-tetramethyl-1,4-disilabutan]bis(pentamethylcyclopentadienylzirkoniumdimethyl)
[1,4-Bis(9-fluorenyl)-1,1,4,4-tetramethyl-1,4-disilabutan]bis(cyclopentadienylzirkoniumdimethyl)
[1,4-Bis(1-indenyl)-1,1,4,4-tetramethyl-1,4-disilabutan]bis(cyclopentadienylzirkoniumdimethyl)
[1-(1-indenyl)-6-(2-phenyl-1-indenyl)-1,1,6,6-tetraethyl-1,6-disila-4-oxahexan]bis(tert-butylcyclopentadienylzirkoniumdimethyl)
[1,10-Bis(2,3-dimethyl-1-indenyl)-1,1,10,10-tetramethyl-1,10-digermadecan]bis(2-methyl-4-phenylindenylzirkoniumdimethyl)
(1-Methyl-3-tert-butylcyclopentadienyl)(1-phenyl-4-methoxy-7-chlorofluorenyl)zirkoniumdimethyl
(4,7-Dichloroindenyl) (3, 6-dimesitylfluorenyl)zirkoniumdimethyl
Bis(2,7-di-tert-butyl-9-cyclohexylfluorenyl)zirkoniumdimethyl
(2,7-Dimesitylfluorenyl)[2,7-bis(1-naphthyl)fluorenyl]zirkoniumdimethyl
Dimethylsilylbis(fluorenyl)zirkoniumdimethyl
Dibutylstannylbis(2-methylfluorenyl)zirkoniumdimethyl
1,1,2,2-Tetraethyldisilandiyl(2-methylindenyl)(4-phenylfluorenyl)zirkoniumdimethyl
Propylen-1-(2-indenyl)-2-(9-fluorenyl)zirkoniumdimethyl
1,1-Dimethyl-1-silaethylenbis(fluorenyl)zirkoniumdimethyl
[4-(Cyclopentadienyl)-4,7,7-trimethyl(tetrahydroindenyl)]zirkoniumdimethyl
[4-(Cyclopentadienyl)-4,7-dimethyl-7-phenyl(5,6-dimethyltetrahydroindenyl)]zirkoniumdimethyl
[4-(Cyclopentadienyl)-4,7-dimethyl-7-(1-naphthyl)(7-phenyltetrahydroindenyl)]zirkoniumdimethyl
[4-(Cyclopentadienyl)-4, 7-dimethyl-7-butyl(6, 6-diethyltetrahydroindenyl)]zirkoniumdimethyl
[4-(3-tert-Butyicyclopentadienyl)-4,7,7-trimethyl(tetrahydroindenyl)]zirkoniumdimethyl
[4-(1 -Indenyl)-4,7,7-trimethyl(tetrahydroindenyl)]zirkoniumdimethyl
Bis(cyclopentadienyl)hafniumdimethyl
Bis(indenyl)vanadiumdimethyl
Bis(fluorenyl)scandiumdimethyl
(Indenyl)(fluorenyl)niobiumdimethyl
(2-Methyl-7-naphthylindenyl)(2,6-di-tert-butylfluorenyl)titandimethyl
(Pentamethylcyclopentadienyl)(tetrahydroindenyl)hafniumbromidmethyl
(Cyclopentadienyl)(1-octen-8-ylcyclopentadienyl)hafniumdimethyl
(Indenyl)(2-buten-4-ylcyclopentadienyl)titandimethyl

[1,3-Bis(trimethylsilyl)cyclopentadienyl](3,4-benzofluorenyl)niobiumdimethyl
Dimethylsilandiylbis(indenyl)titandimethyl
Dimethylsilandiylbis(tetrahydroindenyl)hafniumdimethyl
Dimethylsilandiyl(cyclopentadienyl)(indenyl)titandimethyl
Dimethylsilandiylbis(2-methylindenyl)hafniumdimethyl
Dimethylsilandiylbis(2-ethylindenyl)scandiummethyl
Dimethylsilandiylbis(2-butyl-4,5-benzoindenyl)niobiumdimethyl
Dimethylsilandiylbis(2-ethyl-4,5-benzoindenyl)titandimethyl
Dimethylsilandiylbis(4,5-dihydro-8-methyl-7H-cyclopent[e]acenaphthylen-7-yliden)titandimethyl
Dimethylsilandiyl(2-methyl-4,5-benzoindenyl)(2-methyl-4-phenylindenyl)titandimethyl
Dimethylsilandiyl(2-ethyl-4,5-benzoindenyl)(2-methyl-4-phenylindenyl)hafniumdimethyl
Dimethylsilandiyl(2-methyl-4,5-benzoindenyl)(2-ethyl-4-phenylindenyl)scandiummethyl
Dimethylsilandiyl(2-ethyl-4,5-benzoindenyl)(2-ethyl-4-naphthylindenyl)titandimethyl
Dimethylsilandiyl(2-methylindenyl)(4-phenylindenyl)hafniumdimethyl
Dimethylsilandiyibis(2-methyl-4-phenylindenyl)niobiumdimethyl
Dimethylsilandiylbis(2-ethyl-4-phenylindenyl)vanadiumdimethyl
Dimethylsilandiylbis(2-methyl-4,6-diisopropylindenyl)hafniumdimethyl
Dimethylsilandiylbis(2-ethyl-4,6-diisopropylindenyl)vanadiumdimethyl
Dimethylsilandiylbis(2-methyl-4-naphthylindenyl)hafniumbromidmethyl
Dimethylsilandiylbis(2-ethyl-4-naphthylindenyl)titandimethyl
Methylphenylsilandiylbis(indenyl)titandimethyl
Methylphenylsilandiyl(cyclopentadienyl)(indenyl)hafniumdimethyl
Methylphenylsilandiylbis(tetrahydroindenyl)hafniumdimethyl
Methylphenylsilandiylbis(2-methylindenyl)titandimethyl
Methylphenylsilandiylbis(2-ethylindenyl)hafniumdimethyl
Methylphenylsilandiylbis(2-methyl-4, 5-benzoindenyl)hafniumdimethyl
Methylphenylsilandiylbis(2-ethyl-4,5-benzoindenyl)vanadiumdimethyl
Methylphenylsilandiylbis(4,5-dihydro-8-methyl-7H-cyclopent[e]acenaphthylen-7-yliden)titandimethyl
Methylphenylsilandiyl(2-methyl-4,5-benzoindenyl)(2-methyl-4-phenylindenyl)titanbromidmethyl
Methylphenylsilandiyl(2-ethyl-4,5-benzoindenyl)(2-methyl-4-phenylindenyl)titandimethyl
Methylphenylsilandiyl(2-methyl-4,5-benzoindenyl)(2-ethyl-4-phenylindenyl)hafniumdimethyl
Methylphenylsilandiyl(2-ethyl-4,5-benzoindenyl)(2-ethyl-4-naphthylindenyl)hafniumdimethyl
Methylphenylsilandiyl(2-methylindenyl) (4-phenylindenyl)titandimethyl
Methylphenylsilandiylbis(2-methyl-4-phenylindenyl)hafniumdimethyl
Methylphenylsilandiylbis(2-ethyl-4-phenylindenyl)vanadiumdimethyl
Methylphenylsilandiylbis(2-methyl-4,6-diisopropylindenyl)titandimethyl
Methylphenylsilandiylbis(2-ethyl-4,6-diisopropylindenyl)hafniumdimethyl
Methylphenylsilandiylbis(2-methyl-4-naphthylindenyl)hafniumdimethyl .
Methylphenylsilandiylbis(2-ethyl-4-naphthylindenyl)titandimethyl
Diphenylsilandiylbis(indenyl)titandimethyl
Diphenylsilandiylbis(2-methylindenyl)hafniumdimethyl
Diphenylsilandiylbis(2-ethylindenyl)titandimethyl
Diphenylsilandiyl(cyclopentadienyl)(indenyl)hafniumdimethyl
Diphenylsilandiylbis(2-methyl-4,5-benzoindenyl)titandimethyl
Diphenylsilandiylbis(2-ethyl-4,5-benzoindenyl)hafniumdimethyl
Diphenylsilandiyl(2-methyl-4,5-benzoindenyl)(2-methyl-4-phenylindenyl)hafniumdimethyl
Diphenylsilandiyl(2-ethyl-4,5-benzoindenyl)(2-methyl-4-phenylindenyl)titandimethyl
Diphenylsilandiyl(2-methyl-4,5-benzoindenyl)(2-ethyl-4-phenylindenyl)hafniumdimethyl
Diphenylsilandiyl(2-ethyl-4,5-benzoindenyl)(2-ethyl-4-naphthylindenyl)titandimethyl
Diphenylsilandiyl(2-methylindenyl)(4-phenylindenyl)titandimethyl
Diphenylsilandiylbis(2-methyl-4-phenylindenyl)titandimethyl
Diphenylsilandiylbis(2-ethyl-4-phenylindenyl)hafniumdimethyl
Diphenylsilandiylbis(2-methyl-4,6-diisopropylindenyl)hafniumdimethyl
Diphenylsilandiylbis(2-ethyl-4,6-diisopropylindenyl)hafniumdimethyl
Diphenylsilandiylbis(2-methyl-4-naphthylindenyl)hafniumdimethyl
Diphenylsilandiylbis(2-ethyl-4-naphthylindenyl)titandimethyl
1-Silacyclopentan-1,1-bis(indenyl)hafniumdimethyl
1-Silacyclopentan-1,1-bis(2-methylindenyl)hafniumdimethyl

1-Silacyclopentan-1,1-bis(2-ethylindenyl)hafniumdimethyl
1-Silacyclopentan-1,1-bis(2-methyl-4,5-benzoindenyl)titandimethyl
1-Silacyclopentan-1,1-bis(2-ethyl-4, 5-benzoindenyl)hafniumdimethyl
1-Silacyclopentan-1-(2-methyl-4, 5-benzoindenyl)-1-(2-methyl-4-phenylindenyl)scandiummethyl
1-Silacyclopentan-1-(2-ethyl-4,5-benzoindenyl)-1-(2-methyl-4-phenylindenyl)hafniumdimethyl
1-Silacyclopentan-1-(2-methyl-4,5-benzoindenyl)-1-(2-ethyl-4-phenylindenyl)titandimethyl
1-Silacyclopentan-1-(2-ethyl-4,5-benzoindenyl)-1-(2-ethyl-4-naphthylindenyl)hafniumdimethyl
1-Silacyclopentan-1-(2-methylindenyl)-1-(4-phenylindenyl)hafniumdimethyl
1-Silacyclopentan-1,1-bis(2-methyl-4-phenylindenyl)hafniumdimethyl
1-Silacyclopentan-1,1-bis(2-ethyl-4-phenylindenyl)titanbromidmethyl
1-Silacyclopentan-1,1-bis(2-methyl-4,6-diisopropylindenyl)titandimethyl
1-Silacyclopentan-1,1-bis(2-ethyl-4,6-diisopropylindenyl)titandimethyl
1-Silacyclopentan-1,1-bis(2-methyl-4-naphthylindenyl)scandiummethyl
1-Silacyclopentan-1,1-bis(2-ethyl-4-naphthylindenyl)hafniumdimethyl
Bis(cyclopentadienyl)titandimethyl
Ethylen-1,2-bis(indenyl)scandiummethyl
Ethylen-1,2-bis(tetrahydroindenyl)titandimethyl
Ethylen-1-cyclopentadienyl-2-(1-indenyl)hafniumdimethyl
Ethylen-1-cyclopentadienyl-2-(2-indenyl)titanbromidmethyl
Ethylen-1-cyclopentadienyl-2-(2-methyl-1-indenyl)hafniumdimethyl
Ethylen-1,2-bis(2-methylindenyl)hafniumdimethyl
Ethylen-1,2-bis(2-ethylindenyl)hafniumdimethyl
Ethylen-1,2-bis(2-methyl-4,5-benzoindenyl)hafniumdimethyl
Ethylen-1,2-bis(2-ethyl-4,5-benzoindenyl)titandimethyl
Ethylen-1,2-bis(4,5-dihydro-8-methyl-7H-cyclopent[e]acenaphthylen-7-yliden)titandimethyl
Ethylen-1-(2-methyl-4,5-benzoindenyl)-2-(2-methyl-4-phenylindenyl)titandimethyl
Ethylen-1-(2-ethyl-4, 5-benzoindenyl)-2-(2-methyl-4-phenylindenyl)titandimethyl
Ethylen-1-(2-methyl-4,5-benzoindenyl)-2-(2-ethyl-4-phenylindenyl)scandiummethyl
Ethylen-1-(2-ethyl-4,5-benzoindenyl)-2-(2-ethyl-4-naphthylindenyl)hafniumdimethyl
Ethylen-1-(2-methylindenyl)-2-(4-phenylindenyl)titandimethyl
Ethylen-1,2-bis(2-methyl-4-phenylindenyl)hafniumdimethyl
Ethylen-1,2-bis(2-ethyl-4-phenylindenyl)hafniumdimethyl
Ethylen-1,2-bis(2-methyl-4,6-diisopropylindenyl)hafniumdimethyl
Ethylen-1,2-bis(2-ethyl-4,6-diisopropylindenyl)titandimethyl
Ethylen-1,2-bis(2-methyl-4-naphthylindenyl)titandimethyl
Ethylen-1,2-bis(2-ethyl-4-naphthylindenyl)hafniumdimethyl
Propylen-2,2-bis(indenyl)hafniumdimethyl
Propylen-2-cyclopentadienyl-2-(1-indenyl)titandimethyl
Propylen-2-cyclopentadienyl-2-(4-phenyl-1-indenyl)titandimethyl
Propylen-2-cyclopentadienyl-2-(9-fluorenyl)hafniumdimethyl
Propylen-2-cyclopentadienyl-2-(2,7-dimethoxy-9-fluorenyl)hafniumdimethyl
Propylen-2-cyclopentadienyl-2-(2,7-di-tert-butyl-9-fluorenyl)hafniumdimethyl
Propylen-2-cyclopentadienyl-2-(2,7-dibromo-9-fluorenyl)titandimethyl
Propylen-2-cyclopentadienyl-2-(2,7-diphenyl-9-fluorenyl)hafniumdimethyl
Propylen-2-cyclopentadienyl-2-(2,7-dimethyl-9-fluorenyl)titandimethyl
Propylen-2-(3-methylcyclopentadienyl)-2-(2,7-dibutyl-9-fluorenyl)hafniumdimethyl
Propylen-2-(3-tert-butylcyclopentadienyl)-2-(2,7-dibutyl-9-fluorenyl)titandimethyl
Propylen-2-(3-trimethylsilylcyclopentadienyl)-2-(3,6-di-tert-butyl-9-fluorenyl)titandimethyl
Propylen-2-cyclopentadienyl-2-[2,7-bis(3-buten-1-yl)-9-fluorenyl]hafniumdimethyl
Propylen-2-cyclopentadienyl-2-(3-tert-butyl-9-fluorenyl)titandimethyl
Propylen-2,2-bis(tetrahydroindenyl)hafniumdimethyl
Propylen-2,2-bis(2-methylindenyl)hafniumdimethyl
Propylen-2,2-bis(2-ethylindenyl)titandimethyl
Propylen-2,2-bis(2-methyl-4,5-benzoindenyl)titandimethyl
Propylen-2,2-bis(2-ethyl-4,5-benzoindenyl)hafniumdimethyl
Propylen-2,2-bis(4,5-dihydro-8-methyl-7H-cyclopent[e]acenaphthylen-7-yliden)hafniumdimethyl
Propylen-2-(2-methyl-4,5-benzoindenyl)-2-(2-methyl-4-phenylindenyl)hafniumdimethyl
Propylen-2-(2-ethyl-4,5-benzoindenyl)-2-(2-methyl-4-phenylindenyl)titandimethyl

Propylen-2-(2-methyl-4,5-benzoindenyl)-2-(2-ethyl-4-phenylindenyl)hafniumdimethyl
Propylen-2-(2-ethyl-4,5-benzoindenyl)-2-(2-ethyl-4-naphthylindenyl)titandimethyl
Propylen-2-(2-methylindenyl)-2-(4-phenylindenyl)hafniumdimethyl
Propylen-2,2-bis(2-methyl-4-phenylindenyl)titandimethyl
Propylen-2,2-bis(2-ethyl-4-phenylindenyl)hafniumdimethyl
Propylen-2,2-bis(2-methyl-4,6-diisopropylindenyl)titandimethyl
Propylen-2,2-bis(2-ethyl-4,6-diisopropylindenyl)hafniumdimethyl
Propylen-2,2-bis(2-methyl-4-naphthylindenyl)titandimethyl
Propylen-2,2-bis(2-ethyl-4-naphthylindenyl)titandimethyl
1,6-Bis[methylsilylbis(2-methyl-4-phenylindenyl)hafniumdimethyl]hexan
1,6-Bis[methylsilylbis(2-methyl-4,5-benzoindenyl)titandimethyl]hexan
1,6-Bis[methylsilylbis(2-ethyl-4-phenylindenyl)hafniumdimethyl]hexan
1,6-Bis[methylsilylbis(2-methyl-4-naphthylindenyl)titandimethyl]hexan
1,6-Bis[methylsilylbis(2-methyl-4,6-diisopropylindenyl)hafniumdimethyl]hexan
1,6-Bis[methylsilyl(2-methyl-4-phenylindenyl)(4,5-benzoindenyl)titandimethyl]hexan
1-[Methylsilylbis(tetrahydroindenyl)hafniumdimethyl]-6-[ethylstannyl(cyclopentadienyl)-(fluorenyl)titandimethyl]hexan
1,6-Disila-1,1,6,6-tetramethyl-1,6-bis[methylsilylbis(2-methyl-4-phenylindenyl)hafnium-dimethyl]hexan
1,4-Disila-1,4-bis[methylsilylbis(2-methyl-4-phenylindenyl)hafniumdimethyl]cyclohexan
[1,4-Bis(1-indenyl)-1,1,4,4-tetramethyl-1,4-disilabutan]bis(pentamethylcyclopentadienylhafniumdimethyl)
[1,4-Bis(9-fluorenyl)-1,1,4,4-tetramethyl-1,4-disilabutan]bis(cyclopentadienylhafniumdimethyl)
[1,4-Bis(1-indenyl)-1,1,4,4-tetramethyl-1,4-disilabutan]bis(cyclopentadienyltitandimethyl)
[1-(1-indenyl)-6-(2-phenyl-1-indenyl)-1,1,6,6-tetraethyl-1,6-disila-4-oxahexan]bis(tert-butylcyclopentadienyltitandimethyl)
[1,10-Bis(2,3-dimethyl-1-indenyl)-1,1,10,10-tetramethyl-1,10-digermadecan]bis(2-methyl-4-phenylindenylhafniumdimethyl)
(1-Methyl-3-tert-butylcyclopentadienyl)(1-phenyl-4-methoxy-7-chlorofluorenyl)titandimethyl
(4,7-Dichloroindenyl)(3,6-dimesitylfluorenyl)titandimethyl
Bis(2,7-di-tert-butyl-9-cyclohexylfluorenyl)hafniumdimethyl
(2,7-Dimesitylfluorenyl)[2,7-bis(1-naphthyl)fluorenyl]hafniumdimethyl
Dimethylsilylbis(fluorenyl)titandimethyl
Dibutylstannylbis(2-methylfluorenyl)hafniumdimethyl
1,1,2,2-Tetraethyldisilandiyl(2-methylindenyl)(4-phenylfluorenyl)titandimethyl
Propylen-1-(2-indenyl)-2-(9-fluorenyl)hafniumdimethyl
1,1-Dimethyl-1-silaethylenbis(fluorenyl)titandimethyl
[4-(Cyclopentadienyl)-4,7,7-trimethyl(tetrahydroindenyl)]titandimethyl
[4-(Cyclopentadienyl)-4,7-dimethyl-7-phenyl(5,6-dimethyltetrahydroindenyl)]hafniumdimethyl
[4-(Cyclopentadienyl)-4,7-dimethyl-7-(1-naphthyl) (7-phenyltetrahydroindenyl)]titandimethyl
[4-(Cyclopentadienyl)-4,7-dimethyl-7-butyl(6,6-diethyltetrahydroindenyl)]hafniumdimethyl
[4-(3-tert-Butylcyclopentadienyl)-4,7,7-trimethyl(tetrahydroindenyl)]hafniumdimethyl
[4-(1-Indenyl)-4,7,7-trimethyl(tetrahydroindenyl)]titandimethyl
Bis(cyclopentadienyl)zirkoniumdichlorid
Bis(indenyl)zirkoniumdichlorid
Bis(fluorenyl)zirkoniumdichlorid
(Indenyl)(fluorenyl)zirkoniumdichlorid
Bis(cyclopentadienyl)titandichlorid
Dimethylsilandiylbis(indenyl)zirkoniumdichlorid
Dimethylsilandiylbis(tetrahydroindenyl)zirkoniumdichlorid
Dimethylsilandiylbis(cyclopentadienyl)(indenyl)zirkoniumdichlorid
Dimethylsilandiylbis(2-methylindenyl)zirkoniumdichlorid
Dimethylsilandiylbis(2-ethylindenyl)zirkoniumdichlorid
Dimethylsilandiylbis(2-methyl-4,5-benzoindenyl)zirkoniumdichlorid
Dimethylsilandiylbis(2-ethyl-4,5-benzoindenyl)zirkoniumdichlorid
Dimethylsilandiylbis(2-methyl-4-phenylindenyl)zirkoniumdichlorid
Dimethylsilandiylbis(2-ethyl-4-phenylindenyl)zirkoniumdichlorid
Dimethylsilandiylbis(2-methyl-4,6-düsopropyhndenyl)zirkoniumdichlorid
Ethylen-1,2-bis(indenyl)zirkoniumdichlorid
Ethylen-1,2-bis(tetrahydroindenyl)zirkoniumdichlorid

Ethylen-1,2-bis(2-methylindenyl)zirkoniumdichlorid
Ethylen-1,2-bis(2-ethylindenyl)zirkoniumdichlorid
Ethylen-1,2-bis(2-methyl-4,5-benzoindenyl)zirkoniumdichlorid
Ethylen-1,2-bis(2-methyl-4-phenylindenyl)zirkoniumdichlorid
Ethylen-1,2-bis(2-ethyl-4-phenylindenyl)zirkoniumdichlorid
Ethylen-1,2-bis(2-methyl-4,6-diisopropylindenyl)zirkoniumdichlorid
Propylen-2,2-bis(indenyl)zirkoniumdichlorid
Propylen-2,2-(cyclopentadienyl)(indenyl)zirkoniumdichlorid
Propylen-2,2-(cyclopentadoenyl)(fluorenyl)zirkoniumdichlorid
Bis(cyclopentadienyl)($\eta^4$-butadien)zirkonium
Bis(methylcyclopentadienyl)($\eta^4$-butadien)zirkonium
Bis(n-butyl-cyclopentadienyl)($\eta^4$-butadien)zirkonium
Bisindenyl($\eta^4$-butadien)zirkonium
(tert.butylamido)dimethyl(tetramethyl-η5-cyclopentadienyl)silan-($\eta^{4-}$butadien)zirkonium
Bis(2-methylbenzoindenyl)($\eta^4$-butadien)zirkonium
Dimethylsilandiylbis(2-methyl-indenyl)($\eta^4$-butadien)zirkonium
Dimethylsilandiylbisindenyl($\eta^4$-butadien)zirkonium
Dimethylsilandiylbis(2-methylbenzoinderiyl)($\eta^4$-butadien)zirkonium
Dimethylsilandiyl(2-methylbenzoindenyl)(2-methyl-indenyl)($\eta^{4-}$butadien)zirkonium
Dimethylsilandiyl(2-methylbenzoindenyl)(2-methyl-4-phenylindenyl)($\eta^{4-}$butadien)zirkonium
Dimethylsilandiyl(2-methylindenyl)(4-phenylindenyl)($\eta^4$-butadien)zirkonium
Dimethylsilandiylbis(2-methyl-4-phenyl-indenyl)($n^4$-butadien)zirkonium
Dimethylsilandiylbis(2-methyl-4,6-diisopropyl-indenyl)($\eta^4$-butadien)zirkonium
Dimethylsilandiylbis(2-methyl-4-naphthyl-indenyl)($\eta^4$-butadien)zirkonium
Isopropyliden(cyclopentadienyl)(fluorenyl)($\eta^4$-butadien)zirkonium
Isopropyliden(cyclopentadienyl)(indenyl)($\eta^4$-butadien)zirkonium
[4-η5-Cyclopentadienyl)-4,7,7-trimethyl-(η5-4,5,6,7-tetrahydroindenyl)($\eta^{4-}$butadien)zirkonium
Dimethylsilandiylbis(2-methyl-indenyl)($\eta^4$-butadien)zirkonium
Dimethylsilandiylbisindenyl($\eta^4$-butadien)zirkonium
Dimethylsilandiylbis(2-methylbenzoindenyl)($\eta^4$-butadien)zirkonium
Dimethylsilandiyl(2-methylbenzoindenyl)(2-methyl-indenyl)($\eta^{4-}$butadien)zirkonium
Dimethylsilandiyl(2-methylbenzoindenyl)(2-methyl-4-phenylindenyl)($\eta^{4-}$butadien)zirkonium
Dimethylsilandiyl(2-methylindenyl)(4-phenylindenyl)($\eta^4$-butadien)zirkonium
Dimethylsilandiylbis(2-methyl-4-phenyl-indenyl) ($\eta^4$-butadien)zirkonium
Dimethylsilandiylbis(2-methyl-4,6-diisopropyl-indenyl)($\eta^4$-butadien)zirkonium
Dimethylsilandiylbis(2-methyl-indenyl)($\eta^4$-butadien)zirkonium
Dimethylsilandiylbisindenyl($\eta^4$-butadien)zirkonium
Dimethylsilandiylbis(2-methylbenzoindenyl)($\eta^4$-butadien)zirkonium
Dimethylsilandiyl(2-methylbenzoindenyl)(2-methyl-indenyl)($\eta^{4-}$butadien)zirkonium
Dimethylsilandiyl(2-methylbenzoindenyl)(2-methyl-4-phenylindenyl)($\eta^{4-}$butadien)zirkonium
Dimethylsilandiyl(2-methylindenyl)(4-phenylindenyl)($\eta^4$-butadien)zirkonium
Dimethylsilandiylbis(2-methyl-4-phenyl-indenyl)($\eta^4$-butadien)zirkonium
Dimethylsilandiylbis(2-methyl-4,6-diisopropyl-indenyl)($\eta^4$-butadien)zirkonium
Dimethylsilandiylbis(2-methyl-4-naphthyl-indenyl)($\eta^4$-butadien)zirkonium
Dimethylsilandlylbis(2-methyl-indenyl)($\eta^4$-butadien)zirkonium
Dimethylsilandiylbisindenyl($\eta^4$-butadien)zirkonium
Dimethylsilandiylbis(2-methylbenzoindenyl)($\eta^4$-butadien)zirkonium
Dimethylsilandiyl(2-methylbenzoindenyl)(2-methyl-indenyl)($\eta^{4-}$butadien)zirkonium
Dimethylsilandiyl(2-methylbenzoindenyl)(2-methyl-4-phenylindenyl)($\eta^{4-}$butadien)zirkonium
Dimethylsilandiyl(2-methylindenyl)(4-phenylindenyl)($\eta^4$-butadien)zirkonium
Dimethylsilandiylbis(2-methyl-4-phenyl-indenyl)($\eta^4$-butadien)zirkonium
Dimethylsilandiylbis(2-methyl-4,6-diisopropyl-indenyl)($\eta^4$-butadien)zirkonium
Dimethylsilandiylbis(2-methyl-4-naphthyl-indenyl)($\eta^4$-butadien)zirkonium
Methylphenylmethylen-(fluorenyl)(cyclopentadienyl)($\eta^4$-butadien)zirkonium
Diphenylmethylen-(fluorenyl)(cyclopentadienyl)($\eta^4$-butadien)zirkonium
Isopropyliden-(3-methylcyclopentadienyl)(fluorenyl)($\eta^4$-butadien)zirkonium
Dimethylsilandiyl-(3-tert.-Butylcyclopentadienyl)(fluorenyl)($\eta^4$-butadien)zirkonium
Diphenylsilandiyl-(3-(trimethylsilyl)cyclopentadienyl)(fluorenyl)($\eta^{4-}$butadien)zirkonium

Phenylmethylsilandiylbis(2-methyl-indenyl)($\eta^4$-butadien)zirkonium
Phenylmethylsilandiylbisindenyl($\eta^4$-butadien)zirkonium
Phenylmethylsilandiylbis(2-methyl-4,5-benzoindenyl)($\eta^4$-butadien)zirkonium
Phenylmethylsilandiyl(2-methyl-4,5-benzoindenyl)(2-methyl-indenyl)($\eta^{4-}$butadien)zirkonium
Phenylmethylsilandiyl(2-methyl-4,5-benzoindenyl)(2-methyl-4-phenylindenyl)($\eta^{4-}$butadien)zirkonium
Phenylmethylsilandiyl(2-methylindenyl)(4-phenylindenyl)($\eta^4$-butadien)zirkonium
Phenylmethylsilandiylbis(2-methyl-4-phenyl-indenyl)($\eta^4$-butadien)zirkonium
Phenylmethylsilandiylbis(2-ethyl-4-phenyl-indenyl)($\eta^4$-butadien)zirkonium
Phenylmethylsilandiylbis(2-methyl-4,6-diisopropyl-indenyl)($\eta^4$-butadien)zirkonium
Phenylmethylsilandiylbis(2-methyl-4-naphthyl-indenyl)($\eta^4$-butadien)zirkonium
Ethylenbis(2-methyl-indenyl)($\eta^4$-butadien)zirkonium
Ethylenbisindenyl($\eta^4$-butadien)zirkonium
Ethyienbis(2-methyl-4,5-benzoindenyl)($\eta^4$-butadien)zirkonium
Ethylen(2-methyl-4,5-benzoindenyl)(2-methyl-indenyl)($\eta^4$-butadien)zirkonium
Ethylen(2-methyl-4,5-benzoindenyl)(2-methyl-4-phenylindenyl)($\eta^{4-}$butadien)zirkonium
Ethylen(2-methylindenyl)(4-phenylindenyl)($\eta^4$-butadien)zirkonium
Ethylenbis(2-methyl-4,5-benzoindenyl)($\eta^4$-butadien)zirkonium
Ethylenbis(2-methyl-4-phenyl-indenyl)($\eta^4$-butadien)zirkonium
Ethylenbis(2-methyl-4,6-diisopropyl-indenyl)($\eta^4$-butadien)zirkonium
Ethylenbis(2-methyl-4-naphthyl-indenyl) ($\eta^4$-butadien)zirkonium
Ethylenbis(2-ethyl-4-phenyl-indenyl)($\eta^4$-butadien)zirkonium
Ethylenbis(2-ethyl-4,6-diisopropyl-indenyl)($\eta^4$-butadien)zirkonium
Ethylenbis(2-ethyl-4-naphthyl-indenyl)($\eta^4$-butadien)zirkonium
Dimethylsilandiylbis(2-ethyl-4-phenyl-indenyl) ($\eta^4$-butadien)zirkonium
Dimethylsilandiylbis(2,3,5-trimethylcyclopentadienyl)($\eta^4$-butadien)zirkonium
1,6-{Bis[methylsilyl-bis(2-methyl-4-phenyl-indenyl)($\eta^4$-butadien)zirkonium]}hexan
1,6-{Bis[methylsilyl-bis(2-ethyl-4-phenyl-indenyl)($\eta^4$-butadien)zirkonium]}hexan
1,6-{Bis[methylsilyl-bis(2-methyl-4-naphthyl-indenyl)($\eta^{4-}$butadien)zirkonium]}hexan
1, ,6-{Bis[methylsilyl-bis(2-methyl-4,5-benzoindenyl)($n^4$-butadien)-zirkonium]}hexan
1,6-{Bis[methylsilyl-(2-methyl-4-phenyl-indenyl)(2-methyl-indenyl)($\eta^{4-}$butadien)zirkonium]}hexan
1,2-{Bis[methylsilyl-bis(2-methyl-4-phenyl-indenyl)(η4-butadien)zirkonium]}ethan
1,2-{Bis[methylsilyl-bis(2-ethyl-4-phenyl-indenyl)($\eta^4$-butadien)zirkonium]}ethan
1,2-{Bis[methylsilyl-bis(2-methyl-4-naphthyl-indenyl)($\eta^4$-butadien)-zirkonium]}ethan
1, 2-{Bis[methylsilyl-bis(2-methyl-4,5-benzoindenyl)($\eta^{4-}$butadien)zirkonium]}ethan
1, 2-{Bis[methylsilyl-(2-methyl-4-phenyl-indenyl)(2-methyl-indenyl)($\eta^{4-}$butadien)zirkonium]}ethan.

Die vorliegende Erfindung betrifft weiterhin einen Katalysator enthaltend mindestens eine erfindungsgemäße geträgerte chemische Verbindung als Cokatalysator sowie mindestens eine Übergangsmetallverbindung $M^1L_x$, z.B. ein Metallocen. Zudem wird ein Verfahren zur Herstellung eines Olefinpolymers durch Polymerisation mindestens eines Olefins in Gegenwart des erfindungsgemäßen Katalysators beschrieben. Die Polymerisation kann eine Homo- oder eine Copolymerisation sein.

Bevorzugt werden Olefine der Formel $R^\alpha$-CH = CH-$R^\beta$ polymerisiert, worin $R^\alpha$ und $R^\beta$ gleich oder verschieden sind und ein Wasserstoffatom, ein Halogenatom, eine Alkoxy-, Hydroxy-, Alkylhydroxy-, Aldehyd, Carbonsäure- oder Carbonsäureestergruppe oder einen gesättigten oder ungesättigten Kohlenwasserstoffrest mit 1 bis 20 C-Atomen, insbesondere 1 bis 10 C-Atomen bedeuten, der mit einer Alkoxy-, Hydroxy-, Alkylhydroxy-, Aldehyd-, Carbonsäure- oder Carbonsäureestergruppe substituiert sein kann, oder $R^\alpha$ und $R^\beta$ mit den sie verbindenden Atomen einen oder mehrere Ringe bilden. Beispiele für solche Olefine sind 1-Olefine wie Ethylen, Propylen, 1-Buten, 1-Hexen, 4-Methyl-1-penten, 1-Octen, Styrol, cyclische Olefine wie Norbornen, Vinylnorbornen, Tetracyclododecen, Ethylidennorbornen, Diene wie 1,3-Butadien oder 1,4-Hexadien, Biscyclopentadien oder Methacrylsäuremethylester.

Insbesondere werden Propylen oder Ethylen homopolymerisiert, Ethylen mit einem oder mehreren $C_3$-$C_{20}$-$\alpha$-Olefinen, insbesondere Propylen, und /oder einem oder mehreren $C_4$-$C_{20}$-Diene, insbesondere 1,3-Butadien, copolymerisiert oder Propylen mit Norbornen und Ethylen copolymerisiert.
Die Polymerisation wird bevorzugt bei einer Temperatur von -60 bis 300°C, besonders bevorzugt 30 bis 250°C, durchgeführt. Der Druck beträgt 0,5 bis 2500 bar, bevorzugt 2 bis 1500 bar. Die Polymerisation kann kontinuierlich oder diskontinuierlich, ein- oder mehrstufig, in Lösung, in Suspension, in der Gasphase oder in einem überkritischem Medium durchgeführt werden.

Das geträgerte System kann als Pulver oder noch mit Lösemittel behaftet wieder resuspendiert und als Suspension in einem inerten Suspensionsmittel in das Polymerisationssystem eindosiert werden.

Mit Hilfe des erfindungsgemäßen Katalysators kann eine Vorpolymerisation erfolgen. Zur Vorpolymerisation wird bevorzugt das (oder eines der) in der Polymerisation eingesetzte(n) Olefin(e) verwendet.

Zur Herstellung von Olefinpolymeren mit breiter Molekulargewichtsverteilung werden bevorzugt Katalysatorsysteme verwendet, die zwei oder mehr verschiedene Übergangsmetallverbindungen, z.B. Metallocene enthalten.

Zur Entfernung von im Olefin vorhandenen Katalysatorgiften ist eine Reinigung mit einem Aluminiumalkyl, beispielsweise Trimethylaluminium, Triethylaluminium oder Triisobutylaluminium vorteilhaft. Diese Reinigung kann sowohl im Polymerisationssystem selbst erfolgen oder das Olefin wird vor der Zugabe in das Polymerisationssystem mit der Al-Verbindung in Kontakt gebracht und anschließend wieder getrennt.

Als Molmassenregler und/oder zur Steigerung der Aktivität wird, falls erforderlich, Wasserstoff zugegeben. Der Gesamtdruck im Polymerisationssystem beträgt 0,5 bis 2500 bar, bevorzugt 2 bis 1500 bar. Dabei wird die erfindungsgemäße Verbindung in einer Konzentration, bezogen auf das Übergangsmetall von bevorzugt $10^{-3}$ bis $10^{-8}$, vorzugsweise $10^{-4}$ bis $10^{-7}$ mol Übergangsmetall pro $dm^3$ Lösemittel bzw. pro $dm^3$ Reaktorvolumen angewendet.

Geeignete Lösemittel zur Darstellung sowohl der erfindungsgemäßen geträgerten chemischen Verbindung als auch des erfindungsgemäßen Katalysatorsystems sind aliphatische oder aromatische Lösemittel, wie beispielsweise Hexan oder Toluol, etherische Lösemittel, wie beispielsweise Terahydrofuran oder Diethylether oder halogenierte Kohlenwasserstoffe, wie beispielsweise Methylenchlorid oder halogenierte aromatische Kohlenwasserstoffe wie beispielsweise o-Dichlorbenzol.

Vor Zugabe des Katalysatorsystems enthaltend mindestens eine erfindungsgemäße geträgerte chemische Verbindung, und mindestens eine Übergangsmetallverbindung (wie ein Metallocen) kann zusätzlich eine andere Alkylaluminiumverbindung wie beispielsweise Trimethylaluminium, Triethylaluminium, Triisobutylaluminium, Trioctylaluminium oder Isoprenylaluminium zur Inertisierung des Polymerisationssystems (beispielsweise zur Abtrennung vorhandener Katalysatorgifte im Olefin) in den Reaktor gegeben werden. Diese wird in einer Konzentration von 100 bis 0,01 mmol Al pro kg Reaktorinhalt dem Polymerisationssystem zugesetzt. Bevorzugt werden Triisobutylaluminium und Triethylaluminium in einer Konzentration von 10 bis 0,1 mmol Al pro kg Reaktorinhalt eingesetzt, dadurch kann bei der Synthese eines geträgerten Katalysatorsystems das molare Al/M-Verhältnis klein gewählt werden.

Die nachfolgenden Beispiele dienen zur näheren Erläuterung der Erfindung.

Allgemeine Angaben: Herstellung und Handhabung organometallischer Verbindungen erfolgten unter Ausschluß von Luft und Feuchtigkeit unter Argonschutz (Schlenk-Technik). Alle benötigten Lösemittel wurden vor Gebrauch durch mehrstündiges Sieden über geeignete Trockenmittel und anschließende Destillation unter Argon absolutiert. Die Charakterisierung der Verbindungen erfolgt über $^{19}F$-NMR Spektroskopie.

Referenzbeispiel 1: Chlorobis(pentafluorophenyl)boran

4.69 g (40 mmol) Trichlorboran werden in einem Zweihalskolben mit aufgesetztem Trockeneiskühler bei -78°C einkondensiert. Dazu werden zügig 19.31 g (40 mmol)Dimethylbis(pentafluorophenyl)stannan gegeben. Man läßt 30 min bei Raumtemperatur rühren undrührt weitere 2 Stunden bei 100°C. Es tritt eine sehr heftige Reaktion ein, wobei sich mit zunehmender Reaktionsdauer Dichlorodimethylstannan am Kühler abscheidet. Aus der entstandenen hellbraunen Suspension wird das restliche Dichlorodimethylstannan heraussublimiert und der verbleibende Sumpf über eine kurze Kolonne fraktioniert destilliert.
$^{19}F$-NMR ($C_6D_6$): $\delta$ = - 129.5 ppm, - 145.4 ppm, - 161.3 ppm

Referenzbeispiel 2: Bis(pentafluorophenyl)boran

6.9 g (20 mmol) Chlorobis(pentafluorophenyl)boran werden auf -78°C gekühlt und mit 8.9 g (100 mmol) Chlorodimethylsilan werden langsam zugetropft. Beim Erwärmen auf Raumtemperatur löst sich das Boran auf und es bildet sich ein weißer Niederschlag. Man rührt 1 Stunde nach, filtriert den Niederschlag ab und wäscht mit 20 ml Pentan nach.
$^{19}F$-NMR ($C_6D_6$): $\delta$ = - 134.8 ppm, -148.4 ppm, 160.7 ppm

Referenzbeispiel 3: (2,3,5,6-Tetrafluorophenyloxymethyl)-triethoxysilan

3.32 g (20 mmol) 2,3,5,6-Tetrafluorophenol werden in 50 ml Toluol gelöst und bei 0°C mit 8 ml n-Butyllithium (2.5 M in Hexan) versetzt. Die Lösung wird nach Erwärmen auf Raumtemperatur weitere 2 Stunden gerührt. Anschließend werden 4.3 g (Chloromethyl)triethoxysilan (20 mmol) zugetropft und das Reaktionsgemisch 6 Stunden unter Rückfluß gekocht. Die erhaltene Suspension wird filtriert und das Lösemittel im Vakuum abgezogen. Die verbleibende hellgelbe Flüssigkeit wird fraktioniert destilliert.
$^{19}F$-NMR ($C_6D_6$): $\delta$ = - 141.04 ppm, -163.34 ppm

Referenzbeispiel 4: [Bis(pentafluorophenyl)-2,3,5,6-(tetrafluorophenyloxymethyl)-triethoxysilan]-boran

5.6 g (20 mmol) 2,3,5,6-(Tetrafluorophenyloxymethyl)-triethoxysilan werden in 50 ml Diethylether gelöst und bei 0°C mit 8 ml n-Butyllithium (2.5 M in Hexan) versetzt. Die Lösung wird nach Erwärmen auf Raumtemperatur eine Stunde gerührt. Die hellgelbe Lösung wird anschließend zu 7.6 g Chlorobis(pentafluorophenyl)boran (20 mmol) in 50 ml Diethylether getropft. Die erhaltene Suspension wird filtriert und das Lösemittel im Vakuum abgezogen.
Der verbleibende weiße Feststoff wird aus Diethylether/Pentan umkristallisiert.
$^{19}$F-NMR ($C_6D_6$): $\delta$ = - 135.8 ppm, - 142.04 ppm, -149.9 ppm, - 165.34 ppm, 161.8 ppm

Referenzbeispiel 5: 2,3,5,6-(Tetrafluorophenyloxy)-chlorodimethylsilan

3.32 g (20 mmol) 2,3,5,6-Tetrafluorophenol werden in 50 ml Toluol gelöst und bei 0°C mit 8 ml n-Butyllithium (2.5 M in Hexan) versetzt. Die Lösung wird nach Erwärmen auf Raumtemperatur 2 Stunden gerührt. Anschließend werden 2.6 g Dichlorodimethylsilan (20 mmol) zugetropft. Die erhaltene Suspension wird filtriert und das Lösemittel im Vakuum abgezogen. Die verbleibende farblose Flüssigkeit wird fraktioniert destilliert.
$^{19}$F-NMR ($C_6D_6$): $\delta$ = - 143.01 ppm, -164.52 ppm

Referenzbeispiel 6: [Bis(pentafluorophenyl)-2,3,5,6-(tetrafluorophenyloxy)-chlorodimethylsilan]-boran

2.6 g (10 mmol) 2,3,5,6-(Tetrafluorophenyloxy)-chlorodimethylsilan werden in 50 ml Diethylether gelöst und bei 0°C mit 4 ml n-Butyllithium (2.5 M in Hexan) versetzt. Die Lösung wird nach Erwärmen auf Raumtemperatur eine Stunde gerührt. Die hellgelbe Lösung wird anschließend zu 3.8 g Chlorobis(pentafluorophenyl)boran (10 mmol) in 50 ml Diethylether getropft. Die erhaltene Suspension wird filtriert und das Lösemittel im Vakuum abgezogen. Der verbleibende weiße Feststoff wird aus Diethylether/Pentan umkristallisiert.
$^{19}$F-NMR ($C_6D_6$): $\delta$ = - 136.3 ppm, - 142.76 ppm, -150.12 ppm, - 165.78 ppm, 162.98 ppm

Referenzbeispiel 7: 1,4-Bis(dibromoboryl)-2,3,5,6-tetrafluorobenzol

Zu 10 g (40 mmol) $BBr_3$ werden portionsweise 4.44 g (20 mmol) festes 1,4-Bis(trimethylsilyl)-2,3,5,6-tetrafluorobenzol gegeben. Die Mischung wird 5 Stunden auf 80°C erwärmt. Anschließend wird flüchtiges $Me_3SiBr$ an der Ölpumpe entfernt. Das resultierende Produkt hat eine ausreichende Reinheit, um direkt weiter umgesetzt zu werden. Die Ausbeute beträgt 76 %.

Referenzbeispiel 8: Bis(triphenylcarbenium) 1,4-bis{(tri-[pentafluorophenyl])-boryl}2,3, 5, 6-tetrafluorobenzol

Zu 3.8 ml Brompentafluorobenzol (30 mmol) werden in 50 ml Diethylether bei - 78°C 19 ml n-BuLi (30 mmol) gegeben. Es wird 1 Stunde bei dieser Temperatur gerührt. Anschließend werden 2.5 g 1,4-Bis(dibromoboryl)-2,3,5,6-tetrafluorobenzol (5 mmol) portionsweise zugegeben. Die erhaltene Suspension wird langsam auf Raumtemperatur erwärmt, wobei sich ein Niederschlag abschiedet. Dieser wird durch Filtration abgetrennt und das erhaltene Filtrat im Vakuum bis zur Trocknet eingeengt. Das so erhaltene Tilithiumsalz wird in 100 ml Pentan aufgenommen und bei Raumtemperatur mit 2.8 g (10 mmol) Triphenylmethylchlorid versetzt, nach 8 Stunden Rühren wird der orange/rote Feststoff filtriert. Das Filtrat wird in Methylenchlorid extrahiert, um das entstandene LiCl abzutrennen. Fällung mit n-Pentan ergibt einen orange/roten Feststoff (Ausbeute 64 %).

Referenzbeispiel 9: Bis(N,N-dimethylanilinium) 1,4-bis{(tri-[pentafluorophenyl])-boryl}2,3,5,6-tetrafluorobenzol

1.22 g Brompentafluorbenzol (5 mmol) werden in 40 ml n-Hexan gelöst und bei -78°C mit 3.2 ml (5 mmol) n-BuLi versetzt. Die Suspension wird 1 Stunde bei - 78°C gerührt. Anschließend werden 2.1 g 1,4-Bis(dipentafluorophenylboryl)-2,3,5,6-tetrafluorobenzol (2.5 mmol) in 40 ml Hexan zu der obigen Lösung zugetropft. Die erhaltene Suspension wird langsam auf Raumtemperatur erwärmt, wobei sich ein Niederschlag abscheidet. Dieser wird durch Filtration abgetrennt und das erhaltene Filtrat im Vakuum bis zur Trockne eingeengt. Das so erhaltene Dilithiumsalz wird in 40 ml Pentan aufgenommen und bei Raumtemperatur mit 1.6 g Dimethylaniliniumchlorid versetzt. Nach 8 Stunden Rühren wird der weiße Feststoff filtriert. Das Filtrat wird in Methlyenchlorid extrahiert, um das entstandene LiCl abzutrennen. Die Fällung mit Pentan ergibt einen weißen Feststoff (Ausbeute 67 %).

Beispiel 10: Trägerung von Chlorobis(pentafluorophenyl)boran auf Silica (Cokatalysator A)

5g $SiO_2$ (MS 3030, Fa. PQ, getrocknet bei 200°C im Argonstrom) werden in 50 ml Pentan gerührt und bei

Raumtemperatur mit 3.8 g (10 mmol) Chlorobis(pentafluorophenyl)boranversetzt. Das Lösemittel wird abdekantiert und das Trägermaterial nochmals mit Pentan gewaschen. Anschließend wird das verbleibende Lösemittel im Vakuum abgezogen und der Träger im Vakuum getrocknet.

Beispiel 11: Trägerung von [Bis(pentafluorophenyl)-2,3,5,6-(tetrafluorophenyloxymethyl)-triethoxysilan]-boran auf Silica (Cokatalysator B)

5g $SiO_2$ (MS 3030, Fa. PQ, getrocknet bei 200°C im Argonstrom) werden in 50 ml Pentan gerührt und bei Raumtemperatur mit 6.9 g (10 mmol) [Bis(pentafluorophenyl)-2, 3, 5, 6-(tetrafluorophenyloxymethyl)-triethoxysilan]-boran versetzt. Die Suspension wird 1 Stunde bei Raumtemperatur gerührt, das Lösemittel abdekantiert und das Trägermaterial nochmals mit Pentan gewaschen. Anschließend wird das verbleibende Lösemittel im Vakuum abgezogen und der Träger im Vakuum getrocknet.

Beispiel 12: Trägerung von 2,3,5,6-(Tetrafluorophenyloxy)-chloro-dimethylsilan auf Silica (Cokatalysator C)

5g $SiO_2$ (MS 3030, Fa. PQ, getrocknet bei 200°C im Argonstrom) werden in 50 ml Pentan gerührt und bei Raumtemperatur mit 6.0 g (10 mmol) 2,3,5,6-(Tetrafluorphenyloxy)-chlorodimethylsilan versetzt. Die Suspension wird 1 Stunde bei Raumtemperatur gerührt, das Lösemittel abdekantiert und das Trägermaterial nochmals mit Pentan gewaschen. Anschließend wird das verbleibende Lösemittel im Vakuum abgezogen und der Träger im Vakuum getrocknet

Beispiel 13: Trägerung von Bis(pentafluorophenyl)boran auf Silica (Cokatalysator D)

10 g $SiO_2$ (MS 3030, Fa. PQ, getrocknet bei 200°C im Argonstrom) wurden in 40 ml Toluol suspendiert und bei Raumtemperatur mit 4,76 g Vinyltriethoxysilan versetzt. Man ließ diese Mischung 18 h unter Rückfluß kochen, filtrierte dann ab und wusch dreimal mit 40 ml Methanol nach. Lösemittelreste wurden im Ölpumpenvakuum entfernt.
6,0 g Bis(pentafluorophenyl)boran wurden in 40 ml Toluol gelöst und portionsweise mit dem modifizierten $SiO_2$ versetzt. Man rührte die erhaltene Suspension 3 h bei Raumtemperatur, filtrierte dann ab und wusch dreimal mit wenig Toluol nach. Man erhielt einen freifließenden Feststoff.

Beispiel 14: Darstellung des Katalysatorsystems A und Polymerisation

Eine Lösung von 10 mg (0,023 mmol) Dimethylsilandiylbis(2-methylindenyl)zirkoniumdimethyl in 40 ml Toluol wurde portionsweise mit 10 g Cokatalysator A aus Beispiel 10 versetzt. Man ließ 1 h bei Raumtemperatur rühren und entfernte dann das Lösemittel im Ölpumpenvakuum bis zur Gewichtskonstanz. Zum Einschleusen in das Polymerisationssystem wurden 10 g des Katalysatorsystem A in 50 ml Exxsol resuspendiert.
Polymerisation:

> Parallel dazu wurde ein trockener 16-$dm^3$-Reaktor zunächst mit Stickstoff und anschließend mit Propylen gespült und mit 10 $dm^3$ flüssigem Propylen befüllt. Dann wurden 0,5 $cm^3$ einer 20 %igen Triisobutylaluminiumlösung in Varsol mit 30 $cm^3$ Exxsol verdünnt in den Reaktor gegeben und der Ansatz bei 30°C 15 Minuten gerührt.
> Anschließend wurde die Katalysator-Suspension in den Reaktor gegeben. Das Reaktionsgemisch wurde auf die Polymerisationstemperatur von 60°C aufgeheizt (4°C/min) und das Polymerisationssystem 1 h durch Kühlung bei 60°C gehalten. Gestoppt wurde die Polymerisation durch Abgasen des restlichen Propylens. Das Polymer wurde im Vakuumtrockneschrank getrocknet.
> Es resultieren 1,4 kg Polypropylen-Pulver. Der Reaktor zeigte keine Beläge an innenwand oder Rührer. Die Katalysatoraktivität betrug 140 kg PP/g Metallocen x h.

Beispiel 15 : Darstellung des Katalysatorsystems B und Polymerisation

Eine Lösung von 10 mg (0,023 mmol) Dimethylsilandiylbis(2-methylindenyl)zirkoniumdimethyl in 40 ml Toluol wurde portionsweise mit 10 g der Cokatalysator B aus Beispiel 11 versetzt. Man ließ 1 h bei Raumtemperatur rühren und entfernte dann das Lösemittel im Ölpumpenvakuum bis zur Gewichtskonstanz. Zum Einschleusen in das Polymerisationssystem wurden 10 g des Katalysatorsystems B in 50 ml Exxsol resuspendiert.
Polymerisation:

> Parallel dazu wurde ein trockener 16-$dm^3$-Reaktor zunächst mit Stickstoff und anschließend mit Propylen gespült und mit 10 $dm^3$ flüssigem Propylen befüllt. Dann wurden 0,5 $cm^3$ einer 20 %igen Triisobutylaluminiumlösung in Varsol mit 30 $cm^3$ Exxsol verdünnt in den Reaktor gegeben und der Ansatz bei 30°C 15 Minuten gerührt.

Anschließend wurde die Katalysator-Suspension in den Reaktor gegeben. Das Reaktionsgemisch wurde auf die Polymerisationstemperatur von 60°C aufgeheizt (4°C/min) und das Polymerisationssystem 1 h durch Kühlung bei 60°C gehalten.
Gestoppt wurde die Polymerisation durch Abgasen des restlichen Propylens. Das Polymer wurde im Vakuumtrockenschrank getrocknet.
Es resultieren 1,1 kg Polypropylen-Pulver. Der Reaktor zeigte keine Beläge an Innenwand oder Rührer. Die Katalysatoraktivität betrug 110 kg PP/g Metallocen x h.

## Patentansprüche

1. Geträgerte chemische Verbindung der Formel (I)

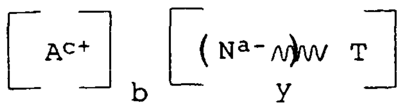

(I)

worin,

$A^{c+}$ ein Kation ist,
c eine ganze Zahl von 1 bis 10 ist,
b eine ganze Zahl ≥ 0 ist,
T ein Träger ist,
y eine ganze Zahl ≥ 1 ist,
a eine ganze Zahl von 0 bis 10 ist, wobei $a \cdot y = c \cdot b$ ist, und
N eine Einheit der Formel (II) ist

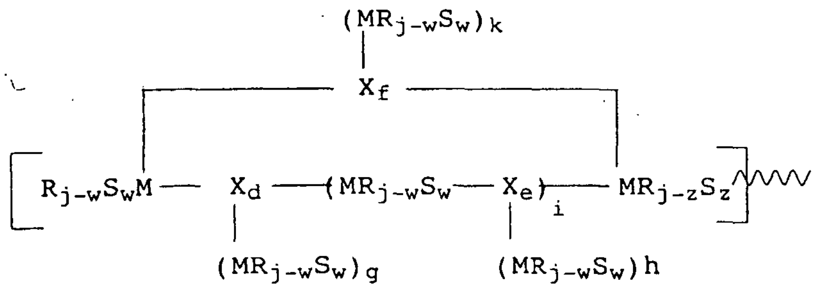

(II),

worin

R unabhängig voneinander gleiche oder verschiedene Substituenten von M sind wie ein Halogenatom oder eine $C_1$-$C_{40}$-kohlenstoffhaltige Gruppe,
X unabhängig voneinander gleich oder verschieden eine $C_1$-$C_{40}$-kohlenstoffhaltige Gruppe sind,
M unabhängig voneinander gleich oder verschieden sind und ein Element der Gruppe IIIa des Periodensystems der Elemente bedeuten,
d gleich 0 oder 1 ist, e gleich 0 oder 1 ist, f gleich 0 oder 1 ist,
g eine ganze Zahl von 0 bis 10 ist, h eine ganze Zahl von 0 bis 10 ist, k eine ganze Zahl von 0 bis 10 ist,
i eine ganze Zahl von 0 bis 1000 ist,
j eine ganze Zahl von 1 bis 6 ist,
S gleich oder verschiedenen Spacer sind, welche M kovalent mit T verbinden, wobei S die Formel (III) haben

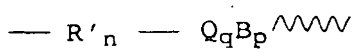

(III)

worin

R' gleich oder verschieden eine $C_1$-$C_{40}$-kohlenstoffhaltige Gruppe ist, oder -NR"-, -PR"-, -P(O)R"-, -Si(R")$_2$-O-SiR"$_2$-, oder -CONR"-, wobei R" eine $C_1$-$C_{40}$-kohlenstoffhaltige Gruppe ist oder R' ist eine heteroatomhaltige Gruppe wie -SO-, -SO$_2$-, -S-, -CO-, -CO$_2$-, -O-, -NH- oder -PH-,
n eine ganze Zahl $\geq 0$ ist,
Q gleich Si, N, P, S oder 0 ist,
q gleich 0 oder 1 ist,
B Substituent von Q ist und $NH_2$, $PH_2$ oder eine $C_1$-$C_{40}$-kohlenstoffhaltige Gruppe ist, oder-NR"$_2$-, -COR"-, -CO$_2$R"-, -PR"$_2$, -P(O)R"$_2$, -Si(R")$_2$-O-Si(R")$_3$-, -C-O-SiR"$_3$-, -CONR"$_2$, -SOR"-, -SO$_2$R"-, -SR"-, -OR"-, -NHR" oder -PHR", wobei R" eine $C_1$-$C_{40}$-kohlenstoffhaltige Gruppe ist und
p eine ganze Zahl $\geq 0$, ist,

B zwei Spacer S miteinander verbinden kann und 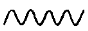 eine oder mehrere kovalente Bindungen zum Träger T bedeutet, wobei in diesem Fall B wie R' definiert ist, und
w in Formel (II) gleich oder verschieden 0, 1 oder 2 sind und z in Formel (II) gleich 0, 1 oder 2 ist.

**2.** Geträgerte neutrale chemische Verbindung der Formel (I)

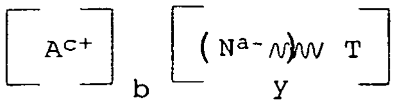

(I)

worin,

$A^{c+}$ ein Kation ist,
c eine ganze Zahl von 1 bis 10 ist,
b eine ganze Zahl $\geq 0$ ist,
T ein Träger ist,
y eine ganze Zahl $\geq 1$ ist,
a 0 ist, wobei $a \cdot y = c \cdot b$ ist, und
N eine Einheit der Formel (II) ist

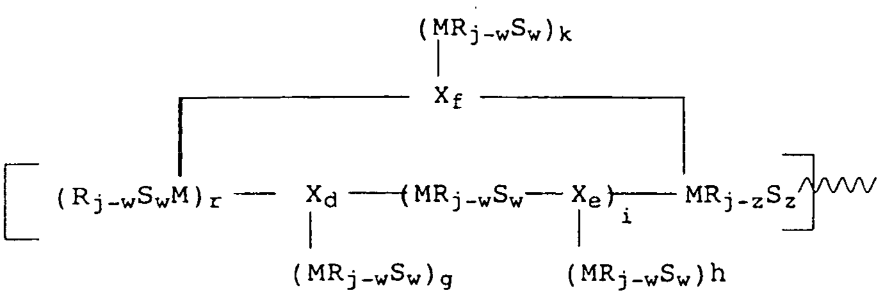

(II),

worin

R unabhängig voneinander gleiche oder verschiedene Substituenten von M sind und einen $C_1$-$C_{40}$-Kohlenwasserstoffrest, der halogeniert ist, bedeuten,
x unabhängig voneinander gleich oder verschieden eine $C_1$-$C_{40}$-kohlenstoffhaltige Gruppe sind
M unabhängig voneinander gleich oder verschieden sind und ein Element der Gruppe IIa, IIIa, IVa oder Va des Periodensystems der Elemente bedeuten,
d gleich 0 oder 1 ist, e gleich 0 oder 1 ist, f gleich 0 oder 1 ist,
g eine ganze Zahl von 0 bis 10 ist, h eine ganze Zahl von 0 bis 10 ist, k eine ganze Zahl von 0 bis 10 ist, r eine ganze Zahl von 0 bis 10 ist,
i eine ganze Zahl von 0 bis 1000 ist
j eine ganze Zahl von 1 bis 6 ist,
S gleich oder verschieden Spacer sind, welche M kovalent mit T verbinden und wobei S die Formel (III) haben

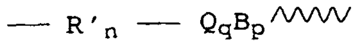 (III),

worin

R' gleich oder verschieden eine $C_1$-$C_{40}$-kohlenstoffhaltige Gruppe ist, -NR"-, -PR"-, -P(O)R"-, -Si(R")$_2$-O-Si (R")$_2$, -C-O-SiR"$_2$ oder -CONR"-, wobei R" eine $C_1$-$C_{40}$-kohlenstoffhaltige Gruppe ist oder R' ist eine heteroatomhaltige Gruppe wie -SO-, -$SO_2$-, -S-, -CO-, -$CO_2$-, -O-, -NH- oder -PH-,
n eine ganze Zahl $\geq 0$ ist,
Q gleich Si, N, P, S oder 0 ist,
q gleich 0 oder 1 ist,
B Substituent von Q ist und $NH_2$, $PH_2$ oder eine $C_1$-$C_{40}$-kohlenstoffhaltige Gruppe ist, oder -NR"$_2$, -COR"-, -$CO_2$R", -PR"$_2$, -P(O)R"$_2$, -Si(R")$_2$-O-Si(R")$_3$-, -CONR"$_2$, -SOR", -$SO_2$R", -SR", -OR", -NHR" oder -PHR", wobei R" eine $C_1$-$C_{40}$-kohlenstoffhaltige Gruppe ist, und
p eine ganze Zahl $\geq 0$ ist,

B zwei Spacer S miteinander verbinden kann und 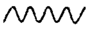 bedeutet eine oder mehrere kovalente Bindungen zum Träger T, wobei in diesem Fall B wie R' definiert ist, und
w in Formel (II) gleich oder verschieden 0, 1 oder 2 sind und z in Formel (II) gleich 0, 1 oder 2 ist.

**3.** Katalysatorsystem, enthaltend a) mindestens eine geträgerte chemische Verbindung gemäß Anspruch 1 oder 2 und b) mindestens eine Übergangsmetallverbindung $M^1L_x$, worin $M^1$ ein Übergangsmetall, L ein Ligand und x eine ganze Zahl von 1 bis 6 ist.

**4.** Katalysatorsystem, erhältlich durch Kombination a) mindestens einer geträgerten chemischen Verbindung gemäß Anspruch 1 oder 2 und b) mindestens einer Übergangsmetallverbindung $M^1L_x$, worin $M^1$ ein Übergangsmetall, L ein Ligand und x eine ganze Zahl von 1 bis 6 ist.

**5.** Katalysatorsystem gemäß Anspruch 3 oder 4, worin die Übergangsmetallverbindung $M^1L_x$ ein Metallocen ist.

**6.** Verfahren zur Herstellung eines Polyolefins durch Polymerisation eines oder mehrerer Olefine in Gegenwart des Katalysatorsystems gemäß einem oder mehreren der Ansprüche 3 bis 5.

**7.** Verwendung einer geträgerten chemischen Verbindung nach Anspruch 1 oder 2 als Katalysatorkornponente zur Olefinpolymerisation.

## Claims

**1.** A supported chemical compound of the formula (I)

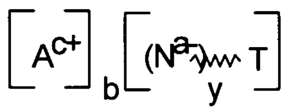 (I)

in which

$A^{c+}$ is a cation,
c is an integer from 1 to 10,
b is an integer 30,
T is a support,
y is an integer 31,
a is an integer from 0 to 10, where aAy = cAb, and
N is a unit of the formula (II)

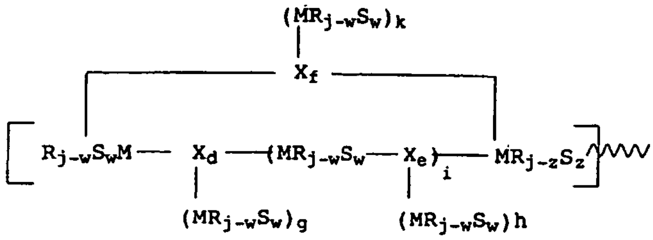

(II)

in which

R independently at each occurrence is an identical or different substituent of M, such as a halogen atom or a $C_1$-$C_{40}$ carbon-containing group
X independently at each occurrence is identical or different and is a $C_1$-$C_{40}$ carbon-containing group
M independently at each occurrence is identical or different and is an element of group IIIa of the Periodic Table of the Elements,
d is 0 or 1, e is 0 or 1, f is 0 or 1,
g is an integer from 0 to 10, h is an integer from 0 to 10, k is an integer from 0 to 10,
i is an integer from 0 to 1000,
j is an integer from 1 to 6,
S at each occurrence is identical or different and is a spacer which links M covalently with T, S having the formula (III)

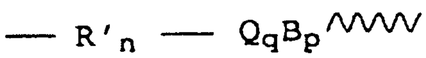

(III)

in which

R' is identical or different at each occurrence and is a $C_1$-$C_{40}$ carbon-containing group, or -NR"-, -PR"-, -P(O)R"-, -Si(R")$_2$- O-SiR"$_2$-, or -CONR"-, where R" is a $C_1$-$C_{40}$ carbon containing group, or R' is a heteroatom-containing group, such as -SO-, -SO$_2$-, -S-, -CO-, -CO$_2$-, -O-, -NH- or -PH-,
n is an integer ∃0,
Q is Si, N, P, S or O,
q is 0 or 1,
B is a substituent of Q and is $NH_2$, $PH_2$ or a $C_1$-$C_{40}$ carbon-containing group, or -NR"$_2$-, -COR"-, -CO$_2$R"-, -PR"$_2$-, -P(O)R"$_2$, -Si(R")$_2$-O-Si(R")$_3$-, -C-O-SiR"$_3$-, -CONR"$_2$, -SOR"-, -SO$_2$R"-, -SR"-, -OR"-, -NHR" or-PHR", where R" is a $C_1$-$C_{40}$ carbon-containing group and
P is an integer 30,

B can link two spacers S to one another and ∿∿∿ denotes one or more covalent bonds to the support T, where in this case B is as defined for R', and
w in formula (II) is identical or different at each occurrence and is 0, 1 or 2, and
z in formula (II) is 0, 1 or 2.

**2.** A supported neutral chemical compound of the formula (I)

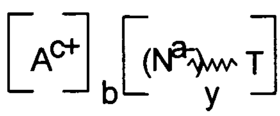

(I)

in which

$A^{c+}$ is a cation,

c is an integer from 1 to 10,
b is an integer 30,
T is a support,
y is an integer ∃1,
a is 0, where aAy = cAb, and
N is a unit of the formula (II)

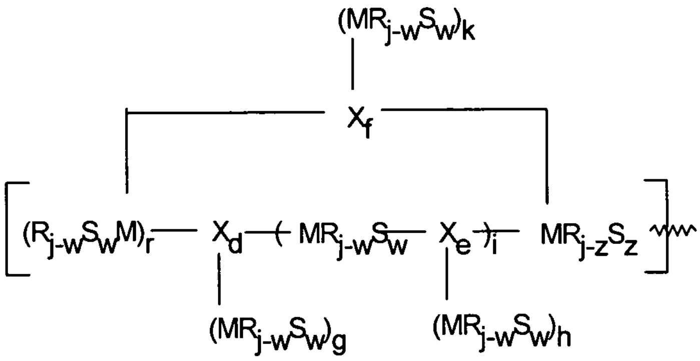

(II)

in which

R independently at each occurrence is an identical or different substituent of M and a $C_1$-$C_{40}$ hydrocarbon radical,
X independently at each occurrence is identical or different and is a $C_1$-$C_{40}$ carbon-containing group
M independently at each occurrence is identical or different and is an element of group IIa, IIIa, IVa or Va of the Periodic Table of the Elements,
d is 0 or 1, e is 0 or 1, f is 0 or 1,
g is an integer from 0 to 10, h is an integer from 0 to 10, k is an integer from 0 to 10, r is an integer from 0 to 10,
i is an integer from 0 to 1000,
j is an integer from 1 to 6,
S at each occurrence is identical or different and is a spacer which links M covalently with T, S having the formula (III)

$$-R'_n-Q_qB_p\sim\sim\sim \qquad (III),$$

in which

R' is identical or different at each occurrence and is a $C_1$-$C_{40}$ carbon-containing group, or-NR"-, -PR"-, -P(O)R"-, -Si(R")$_2$- O-SiR"$_2$-, -C-O-SiR"$_2$ or-CONR"-, where R" is a $C_1$-$C_{40}$ carbon-containing group, or R' is a heteroatom-containing group, such as -SO-, $-SO_2-$, -S-, -CO-, $-CO_2-$, -O-, -NH- or -PH-,
n is an integer ∃0,
Q is Si, N, P, S or O,
q is 0 or 1,
B is a substituent of Q and is $NH_2$, $PH_2$ or a $C_1$-$C_{40}$ carbon-containing group, or -NR"$_2$-, -COR"-, -CO$_2$R"-, -PR"$_2$-, -P(O)R"$_2$, -Si(R")$_2$-O-Si(R")$_3$-, -CONR"$_2$, -SOR"-, -SO$_2$R"-, -SR"-, -OR"-, -NHR" or -PHR", where R" is a $C_1$-$C_{40}$ carbon -containing group and
P is an integer 30,
B can link two spacers S to one another and ∿∿∿ denotes one or more covalent bonds to the support T, where in this case B is as defined for R', and
w in formula (II) is identical or different at each occurrence and is 0, 1 or 2, and
z in formula (II) is 0, 1 or 2.

**3.** A catalyst system comprising a) at least one supported chemical compound as claimed in claim 1 or 2 and b) at least one transition metal compound $M^1L_x$, in which $M^1$ is a transition metal, L is a ligand and x is an integer from 1 to 6.

**4.** A catalyst system obtainable by combining a) at least one supported chemical compound as claimed in claim 1 or 2 and b) at least one transition metal compound $M^1L_x$, in which $M^1$ is a transition metal, L is a ligand and x is an integer from 1 to 6.

**5.** The catalyst system as claimed in claim 3 or 4, wherein the transition metal compound $M^1L_x$ is a metallocene.

**6.** A process for preparing a polyolefin by polymerizing one or more olefins in the presence of the catalyst system as claimed in one or more of claims 3 to 5.

**7.** The use of a supported chemical compound as claimed in claim 1 or 2 as a catalyst component for olefin polymerization.

## Revendications

**1.** Composé chimique supporté de formule (I) :

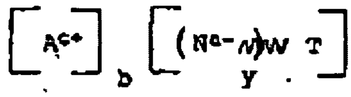

(I)

dans laquelle,
$A^{c+}$ est un cation,
c est un nombre entier de 1 à 10,
b est un nombre entier ≥ 0,
T est un support,
y est un nombre entier ≥ 1,
a est un nombre entier de 0 à 10, où a.y = c.b, et
N est un motif de formule (II)

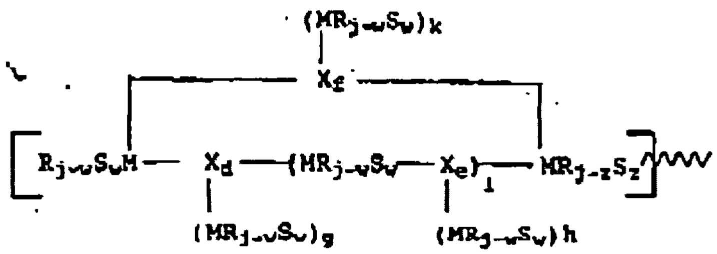

(II),

dans laquelle
R sont, indépendamment les uns des autres, des substituants de M identiques ou différents comme un atome d'halogène ou un groupe carboné en $C_1$ à $C_{40}$,
X sont, indépendamment les uns des autres, identiques ou différents, un groupe carboné en $C_1$ à $C_{40}$,
M sont, indépendamment les uns des autres, identiques ou différents et représentent un élément du groupe IIIa du tableau périodique des éléments,
d est égal à 0 ou 1, e est égal à 0 ou 1, f est égal à 0 ou 1,
g est un nombre entier de 0 à 10, h est un nombre entier de 0 à 10, k est un nombre entier de 0 à 10,
i est un nombre entier de 0 à 1000,
j est un nombre entier de 1 à 6,
S sont, identiques ou différents, des écarteurs, qui lient de manière covalente M avec T, les S ayant pour formule (III) :

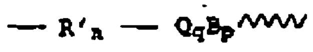 (III)

dans laquelle
R' est, un groupe carboné en $C_1$ à $C_{40}$ identique ou différent, ou -NR"-, -PR"-, -P(O)R"-, $-Si(R")_2-O-Si(R")_2-$ ou -CONR"-, où R" est un groupe carboné en $C_1$ à $C_{40}$, ou R' est un groupe contenant un hétéroatome comme -SO-, $-SO_2-$, -S-, -CO-, $-CO_2-$, -O-, -NH- ou -PH-,
n est un nombre entier ≥ 0,
Q est Si, N, P, S ou 0,
q est égal à 0 ou 1,
B est un substituant de Q et est $NH_2$, $PH_2$ ou un groupe carboné en $C_1$ à $C_{40}$ ou $-NR"_2-$, -COR"-, $-CO_2R"-$, $-PR"_2-$, $-P(O)R"_2-$, $-Si(R")_2-O-Si(R")_3-$, $-C-O-SiR"_3-$, $-CONR"_2$, -SOR"-, $-SO_2R"-$, -SR"-, -OR"-, -NHR" ou -PHR", où R" est un groupe carboné en $C_1$ à $C_{40}$ et
p est un nombre entier ≥ 0,

B peut lier deux écarteurs S ensemble et ∿∿∿ représente une ou plusieurs liaisons covalentes au support T, B étant dans ce cas défini comme R', et
w sont, dans la formule (II), identiques ou différents, 0, 1 ou 2, et
z est, dans la formule (II), identique, 0, 1 ou 2.

**2.** Composé chimique neutre supporté de formule (I) :

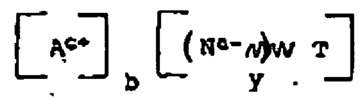 (I)

dans laquelle,
$A^{c+}$ est un cation,
c est un nombre entier de 1 à 10,
b est un nombre entier ≥ 0,
T est un support,
y est un nombre entier ≥ 1,
a est 0, où a.y = c.b, et
N est un motif de formule (II)

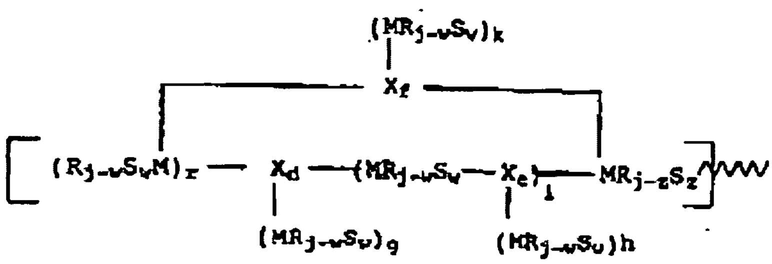 (II),

dans laquelle
R sont, indépendamment les uns des autres, des substituants de M identiques ou différents et représentent un groupe carboné en $C_1$ à $C_{40}$, qui est halogéné,
X sont, indépendamment les uns des autres, identiques ou différents, un groupe carboné en $C_1$ à $C_{40}$,
M sont, indépendamment les uns des autres, identiques ou différents et représentent un élément du groupe IIa, IIIa, IVa ou Va du tableau périodique des éléments,
d est égal à 0 ou 1, e est égal à 0 ou 1, f est égal à 0 ou 1,
g est un nombre entier de 0 à 10, h est un nombre entier de 0 à 10, k est un nombre entier de 0 à 10, r est un nombre entier de 0 à 10,
i est un nombre entier de 0 à 1000,

j est un nombre entier de 1 à 6,
S sont, identiques ou différents, des écarteurs, qui lient de manière covalente M avec T, les S ayant pour formule (III) :

$$-R'_n-Q_qB_p\sim\sim\sim \qquad (III)$$

dans laquelle
R' est, identique ou différent, un groupe carboné en $C_1$ à $C_{40}$, -NR"-, -PR"-, -P(O)R"-, $-Si(R")_2-O-Si(R")_2-C-O-Si(R")_2$ ou -CONR"-, où R" est un groupe carboné en $C_1$ à $C_{40}$ ou R' est un groupe contenant un hétéroatome comme -SO-, $-SO_2-$, -S-, -CO-, $-CO_2-$, -O-, -NH- ou -PH-,
n est un nombre entier ≥ 0,
Q est égal à Si, N, P, S ou O,
q est égal à 0 ou 1,
B est un substituant de Q et représente $NH_2$, $PH_2$ ou un groupe carboné en $C_1$ à $C_{40}$ ou $-NR"_2-$, -COR"-, $-CO_2R"-$, $-PR"_2-$, $-P(O)R"_2-$, $-Si(R")_2-O-Si(R")_3-$, $-CONR"_2$, -SOR"-, $-SO_2R"-$, -SR"-, -OR"-, -NHR" ou -PHR", où R" est un groupe carboné en $C_1$ à $C_{40}$ et
p est un nombre entier ≥ 0,
B peut lier deux écarteurs S ensemble et $\sim\sim\sim$ représente une ou plusieurs liaisons covalentes au support T, B étant dans ce cas défini comme R', et
w sont, dans la formule (II), identiques ou différents, 0, 1 ou 2, et
z est, dans la formule (II), identique, 0, 1 ou 2.

3. Système catalytique, contenant a) au moins un composé chimique supporté selon la revendication 1 ou 2 et b) au moins un composé de métal de transition $M^1L_x$, où $M^1$ est un métal de transition, L est un ligand et x est un nombre entier de 1 à 6.

4. Système catalytique, pouvant être obtenu par une combinaison a) d'au moins un composé chimique supporté selon la revendication 1 ou 2 et b) d'au moins un composé de métal de transition $M^1L_x$, où $M^1$ est un métal de transition, L est un ligand et x est un nombre entier de 1 à 6.

5. Système catalytique selon la revendication 3 ou 4, dans lequel le composé de métal de transition $M^1L_x$ est un métallocène.

6. Procédé de préparation d'une polyoléfine par polymérisation d'une ou de plusieurs oléfines en présence du système catalytique selon une ou plusieurs des revendications 3 à 5.

7. Utilisation d'un composé chimique supporté selon la revendication 1 ou 2 en tant que composant catalytique pour la polymérisation des oléfines.